Europäisches Patentamt

European Patent Office

Office européen des brevets

(19)

(11) Publication number: **0 205 712**
A2

(12) # EUROPEAN PATENT APPLICATION

(21) Application number: 85401073.3

(22) Date of filing: 31.05.85

(51) Int. Cl.⁴: **H 04 N 1/46,** H 04 N 1/40,
G 06 F 15/62

(43) Date of publication of application: 30.12.86
Bulletin 86/52

(71) Applicant: **FAIRCHILD CAMERA & INSTRUMENT
CORPORATION, 464 Ellis Street, Mountain View
California 94042 (US)**

(72) Inventor: **Deering, Michael, 541 Del Medio, No. 132,
Mountain View California 94043 (US)**
Inventor: **Tenenbaum, J. Martin, 25 Alhambra Court,
Portola Valley California 94025 (US)**

(74) Representative: **Chareyron, Lucien et al,
SCHLUMBERGER LIMITED Service Brevets 12, place
des Etats Unis B.P. 121, F-92124 Montrouge Cedex (FR)**

(84) Designated Contracting States: **DE FR GB IT NL**

(54) **Video stream processing system.**

(57) A video stream processing system comprising a novel modular family of image processing and pattern recognition submodules is provided, with the submodules utilizing a unique system signalling and interface protocol, and thus can be cascaded and paralleled to produce complex special purpose image processing systems which can operate at video or near video data rates. A stream of digitized pixel data is pipelined through a variety of submodules to support a wide variety of image processing applications. A common video interface provides for handling pixel data in the video signal path and a processor interface allows communication to any modern microprocessor for overall system control, for optional additional image processing and for defining options within each submodule.

In addition, a video stream processing system frame buffer controller is provided for controlling external dynamic random access memory (DRAM) of a frame buffer and interfacing to the video stream processing signal bus. The frame buffer controller has four interfaces; video input interface, video output interface, memory interface and processor interface. The circuit can input image data from a camera and store the frames in external DRAM. The circuit provides for external processor access to pixels in the frame buffer and for output of the frame or portions of the frame, as well as output of frames in a format of CRT display and external DRAM refresh.

In addition, a video stream processing dither circuit for dithering gray level images for output to a bi-level display such as a dot matrix printer or bit-mapped CRT. The circuit includes an intensity correction look-up table and a resampling scaler capable of scaling independently in each dimension. The dither logic utilizes a varying threshold with an alternating checkerboard pattern with the addition of random noise and allocation or error terms to adjacent image pixels.

-1-

## VIDEO STREAM PROCESSING SYSTEM

This invention relates generally to the field of video signal processing and pattern recognition, and more particularly to a system of video stream processing including a modular family of novel video processing subsystem modules using digital techniques to process stages.

Image recognition techniques are becoming widely utilized to automate the industrial and manufacturing processing applications. Among these are such applications as locating parts on a conveyor belt, verifying the presence of parts during assembly, locating landmarks or targets in aerial imagery, optical character recognition, and locating bonding pads on alignment masks on semiconductor chips. Further, the development and implementation of systems for the more complex real time image processing and pattern recognition tasks call for computational throughputs in excess of those possible utilizing prior art techniques. In addition, in many applications digital techniques are widely employed to process the images. However, due to the massive amount of data to be analyzed and processed in such digital systems, they are often slow and incapable of operating at standard video rates. One technique often utilized to alleviate this problem is the use of parallel processing. However, a number of constraints limit the use of this approach including, with the advent of VLSI techniques, the chip pin-out constraints.

It is accordingly an object of this invention to provide a novel video processing system of video stream processing submodules for image processing and recognition at or near video rates.

It is another object of the invention to provide a novel video processing system having unique image signal protocol.

It is yet another object of the invention to provide a novel system having the unique system architecture comprising novel system processing submodules.

It is yet another object of the invention to provide a novel video stream processing having unique image signal presentation processing.

Briefly, according to one embodiment of the invention, a video stream processing system is provided for processing digitized video information in which a control processor means is utilized for providing control signals and for processing data signals. The system further comprises a plurality of video signal processing elements each having an input board including a digital video information stream input, a video pixel clock input, a control signal input, and a plurality of synchronization signal input. Among the system processing elements are a frame buffer having a processor interface coupled to the control processor and having an output for storage in a digital memory of digitized video information received from at least one of a plurality of ports including the input port and the processor port. The frame buffer controls output of stored digitized video information to at least one of a plurality of ports including the input port, the output port, and the processor interface port, responsive to control processor control signals. Characterization means is provided having a processor interface port, for extracting characteristic data from digitized video information coupled from the frame buffer means responsive to control processor means control signals.

-3-

In another embodiment, the video signal processing elements include a subsystem for video information processing for modifying digitized gray scale video data composed of an array of pixels of at least two-dimensional bounded video images for output on a bi-tonal output device. The subsystem comprises intensity correction means for modifying intensity characteristics of the digital video data responsive to the control signals, and scaling means for expansion and compression scaling of the digital video data independently of each dimension. Processing means is provided for processing the gray scale video data to produce binary video based upon a variable threshold by operating on each pixel and allocating error to a plurality of adjacent pixels in the array. Boundary means including a random noise generator are provided for correcting error terms at the video image boundaries.

## BRIEF DESCRIPTION OF THE DRAWINGS

The features of the present invention which are believed to be novel are set forth below with particularity in the appended claims. The invention, together with further objects and advantages thereof, may be understood by reference to the following description taken in conjunction with the accompanying drawings.

Figure 1A is a generalized block diagram illustrating a specific embodiment of a video stream processing system for image processing.

Figure 1B is a generalized block diagram illustrating the interface and signal protocol for the illustrated novel video stream processing system.

Figure 2 is a detailed block diagram illustrating a specific embodiment of a video stream processing system for rectangle recognition.

Figure 3A is a detailed block diagram illustrating a specific embodiment of a video stream processing linear correction circuit.

Figure 3B is a detailed block diagram illustrating a specific embodiment of a video stream processing multi-frame averaging circuit.

Figure 3C is a detailed block diagram illustrating a specific embodiment of a video stream processing continuous multi-frame averaging circuit.

Figure 4A is a detailed block diagram illustrating a specific embodiment of a novel video stream processing system frame buffer controller (FBC).

Figure 4B is a block diagram illustrating a tandem operating configuration for the frame buffer controller of Figure 4A.

Figure 4C through 4H are a set of flow control diagrams showing data flow for various operational conditions for the frame buffer control.

Figure 5A is a detailed block diagram illustrating a specific embodiment of a novel video stream processing dither circuit.

Figure 5B is a detailed block diagram illustrating a specific embodiment of the novel video stream processing dither circuit logic.

Figure 5C is a block diagram of a specific embodiment of a novel color dither circuit configuration.

Figure 6 is a detailed block diagram of a specific embodiment of a video processing system 3 x 3 median filter.

## DETAILED DESCRIPTION OF THE PREFERRED EMBODIMENT

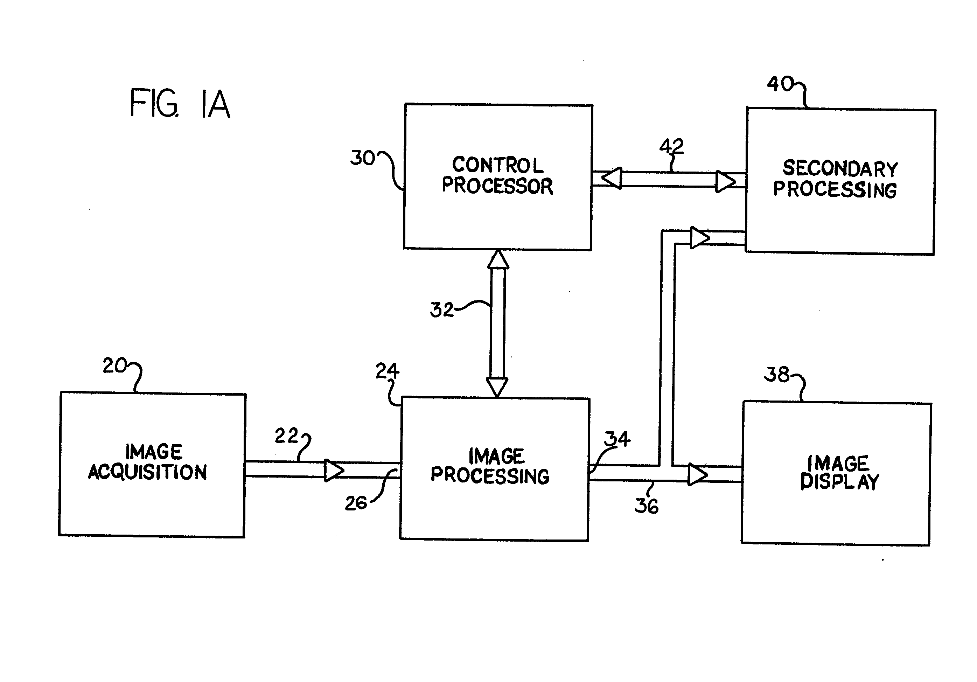

Figure 1A is a generalized block diagram illustrating a video stream processing system for image recognition and analysis according to the invention. Video stream processing (VSP™) is an image processing technique in which a stream of pixels is pipelined through a variety of computational submodules which may take statistics or replace pixels with new computed values. In a pure video stream processing system there is only one linear stream of pixels per pipe upon which all devices operate directly. There may be several parallel pipes. However, images are inherently two dimensional and therefore some image processing submodules use an N-by-N window of local pixels, per pipe, to operate upon. Thus, the novel system of the invention includes streaming by an N-by-N moving window of pixels when appropriate.

Video image signals comprising a stream of pixel data to be processed are provided by an image acquisition device 20 and coupled on a video stream signal bus 22 to an image processing system 24. The image acquisition device 20 typically is a video camera, such as a Fairchild CCD camera, capable of precise generation of video image signals at video rates. Optionally, the video acquisition device 20 may be any image signal source, such as a video tape deck, video disc, graphics computer, etc.

The image signals are digitized by the acquisition device 20 and coupled via the video stream signal bus 22 to the image processing system 24 through a video stream processing interface 26. The image processing system 24 processes the digital image information to modify the data or extract characteristic information to provide image recognition. The processing system 24 is comprised of a family of video stream processing submodules configured to provide the desired image recognition or analysis functions.

The image processing system 24 is controlled by a control processor 30 which is coupled, as shown, to a control processor interface 28 via a processor bus 32. The control processor 30 provides control signals to control each of the video stream processing submodules and provides processing capability for further processing and logic functions on data transferred between video stream processing submodules and the control processor 30 via the processor bus 32. The control processor 30 is also coupled to a secondary processing module 40 via a bus 42, as shown. The secondary processor 40 provides overall system control logic to make use of the image processing information provided by the video stream processing system 24. Typically, the secondary processor 40 is a programmed computer which controls external devices based on image processing information as, for example, in a robotics or automated manufacturing system.

In the illustrated embodiment in Figure 1A, an image display 38 is also provided to permit display of the images being processed or of processed image data. The image display 38 is typically a CRT for real time video display but optionally may include such devices as a printer (e.g., laser printer), an image recording device such as a video tape recorder, a plotter (e.g., electrostatic) or other image display device. The video image signals from the image processing module 24 are coupled to the image display 38 via a video stream signal bus 36 from a video output interface 34, as shown.

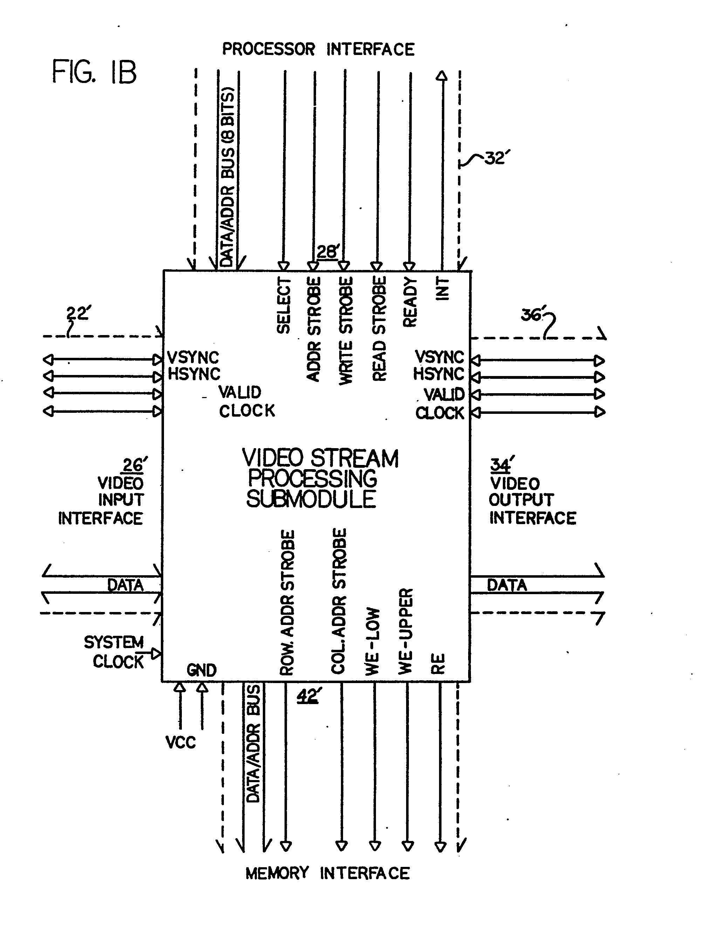

Each VSP submodule of the video stream image processing system 24 includes a VSP input interface 26' and, in most cases, a VSP control processor interface 28' as shown in Figure 1B. Referring to Figure 1B, the VSP input interface 26' is used to transfer video information, digitized into pixels, in raster scan format, together with a pixel signal, a horizontal synchronization signal (line synchronization), a vertical synchronization signal (frame synchronization), and a pixel valid signal. In the illustrated embodiment, there are 8 bits per pixel. Greater or lesser numbers of bits per pixel can be used depending on the embodiment. Thus, as shown in Figure 1B, the VSP input interface couples to a 12 line video stream processing signal bus 22' which is a novel bus configuration employed as the standard VSP signal bus for the illustrated video stream processing system to couple video stream signals between system submodules. In the illustrated embodiment, the VSP signal is comprised of eight data lines and three control lines. In general, the number of data lines can be from zero to sixty-four.

The video clock signal (PIXEL CLOCK) for the VSP input interface 26' is, for asynchronous operation, an asynchronous clock signal with a frequency which is a fraction of the system clock frequency. All of the remaining video input interface signals are internally synchronized to the video clock signal. For the VSP input interface all of the other signals should be valid before the set-up time before the positive edge of the clock and should remain valid until at least the hold-time after the same positive edge of the video clock signal. The vertical synchronization (VSYNC) signal and the horizontal synchronization (HSYNC) signal provide the required synchronization signals associated with the input video pixel data. The valid input signal (PIXEL VALID) indicates that data on the data bus is valid. It should also be noted that the VSP input interface 26' may in some cases be programmed to act as an output interface.

Many video stream processing submodules will also include a VSP output interface 34' such as shown in Figure 1B, typically for transfer of processed video information to other submodules or to image display devices 38 or secondary processor 40. The VSP output interface 34' is similar to the video input interface 26' with the output clock signal (PIXEL CLOCK) synchronized to the system clock for synchronous operation, or at a fraction thereof for asynchronous operation, and with the video data output bus controlled by the pixel valid signal (PIXEL VALID) which is usually bidirectional and can be tri-stated on the output. There is a turn-on delay from the positive edge of the (PIXEL VALID) signal. The turn-on is designed to be slower than the turn-off so that the data paths may be easily multiplexed. The pixel valid signal is asserted active by the VSP output channel to indicate valid data output. If a VSP subsystem coupled to the VSP output channel needs to delay the next output from the VSP output channel, the VSP subsystem asserts the pixel valid signal inactive, overriding the output handshake from the VSP output channel. When the VSP subsystem stops asserting the pixel valid inactive, the pixel valid signal will again go active, and the output channel will resume output of data. All remaining VSP output interface signals are valid before the output-delay time after the positive edge of the output clock signal and remain valid until at least the output hold time after the next positive edge of the output clock signals.

Usually, video stream processing submodules will also include a VSP processor interface 28' as shown in Figure 1B suitable for connection with any modern microprocessor (e.g., a National 16000). The signals on the VSP processor interface may be either synchronous or asynchronous. A submodule select signal (SELECT) serves to enable the processor interface for the submodule. Address information is entered from the data/address bus (DATA/ADDR) during an address strobe, while write data may be entered from the data/address bus if a write strobe occurs. Read data may be presented on the data/address bus during a read strobe. The data/address bus in the illustrated embodiment is preferably an eight bit bus.

If the data transfer cannot proceed then the ready signal (READY) is pulled low until transfer can proceed. A maskable interrupt (INT) may be used to interrupt the processor. Where an eight bit address or eight bit data word is not sufficient, for example, to access external memory, a multiple byte address may be supplied by successive bytes being transferred during successive address strobes.

A low on the SELECT line indicates when the submodule has been selected for activating the VSP processor interface and indicates that control signals on the interface are valid. In addition, a low address strobe line indicates that information on the processor bus 32' is valid address information. For multiple byte addresses the address strobe is asserted low for each address byte transferred. The write strobe when low indicates that information on the processor bus is valid write data and a low read strobe indicates that a submodule may present read data on the processor bus. The interface READY signal indicates that the submodule interface is not ready to proceed with the requested access when low and goes high when access may proceed. Finally, when low, the interface interrupt signal (INT) indicates that a requested status has been reached and the interrupt signal has released when the condition is acknowledged or masked. As shown in Figure 1B, the VSP processor interface 28' couples to a 14 line video stream control processor bus 32' which is the standard VSP processor bus configuration for coupling each VSP system submodule or subsystem to a control processor for the illustrated video stream processing system.

Many submodules can also include a memory interface 42'. The nature of the memory interface 42' is dependent upon the particular features of the VSP submodule, the desired application, and upon the external memory requirements. The memory interface 42' will provide control of external memory with minimal external circuitry. However, the memory interface will typically include at least a 16-bit data bus which may also be used as an address bus as shown in Figure 1B and in addition will include at least a write enable (WE) which when asserted low will indicate when data is on the bus to be written to external RAM. Optionally, a separate memory address bus, typically a 12-bit address bus, may be used for external memory address. In addition, such signals as a row address strobe and column address strobe, and write enable lower and and write enable upper as well as a read enable (RE) signal, may be provided as shown in Figure 1B at the memory interface 42'.

In the case of each VSP video interface 26' and 34', as well as the VSP processor interface 28', the signal protocol described establishes the nature of the VSP busses 22' and 36' as well as the VSP processor bus 32'. This novel bus configuration and signal protocol (i.e., VSP protocol) is employed throughout the illustrated VSP system for coupling among system submodules and control processor.

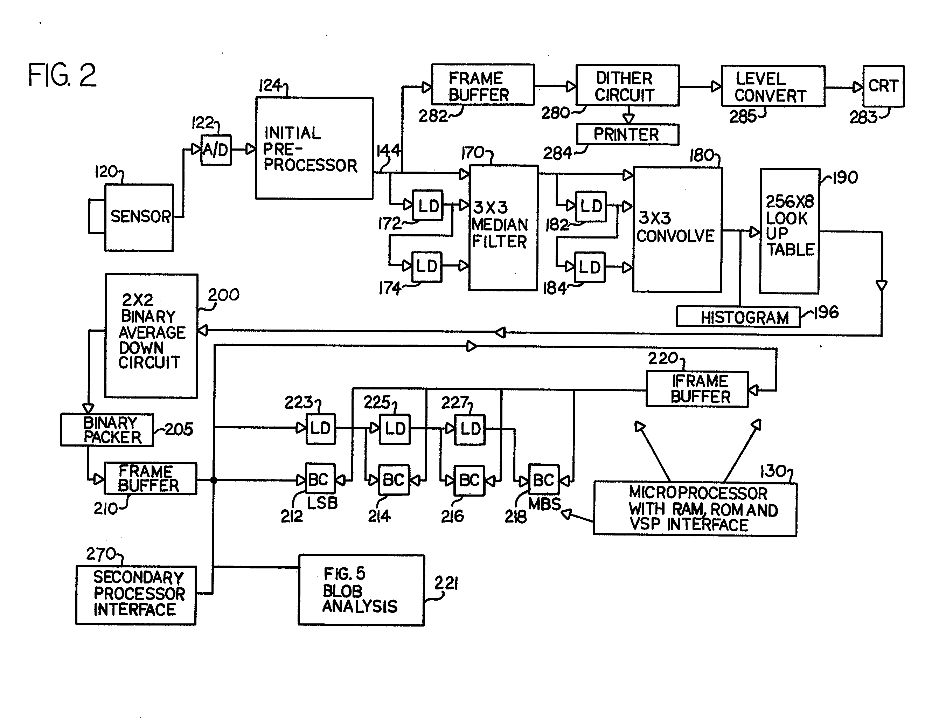

Referring now to Figure 2, there is shown a block diagram of a complete VSP image processing system for locating a desired rectangle in an image. An image sensor 120 (e.g., Fairchild CCD camera) provides video signals representing the image to be processed. These signals are coupled directly to an A/D converter 122, as shown. The A/D converter 122 and the sensor 120 may be considered to be the image acquisition section of the system, and can be integrated into a single component. Alternatively, a VSP A/D subsystem function can be provided which converts the sensor video signals into a VSP data stream. The digitized video information signals are coupled, via a VSP signal bus to the VSP interface of an initial preprocessing module 124. The initial preprocessing module 124, and other preprocessing to be described hereinafter, can be optional in any image processing system, but is shown as part of the preferred embodiment. It should also be noted that at least one microprocessor 130, to control VSP submodules as well as to do further processing for pattern recognition, is provided and coupled to each of the video stream processing submodules as indicated in Figure 2. Although direct connections are omitted for simplicity, the microprocessor 130 couples to each system submodule through a processor interface 28' via a VSP control processor interface 32', when processor connection is appropriate, as described hereinbefore with reference to Figure 1B.

Most image sensors do not produce perfect images and therefore the images require preprocessing in many VSP systems. The imperfections arise from many sources including noise, dirt, distortions in optics, etc., which may distort the image before it reaches the sensor. The sensor itself can also add further distortions as the individual pixels of a sensor area array may all have slightly different response characteristics. Most of these distortions can be corrected by appropriate types of preprocessing. But if the distortion levels are low enough, no image preprocessing may be required.

In the initial preprocessing module 124, a number of possible optional processing approaches may be taken. In some situations, conventional analog equalizing circuits may be effectively utilized; however, in more complex cases a separate gain and offset control must be applied separately to each pixel of the sensor 120. This can be done with an initial processing circuit which provides linear corrections as shown in Figure 3A. Referring to Figure 3A, the digitized signal from the sensor 120 is applied to a correction circuit 140 which corrects each pixel by applying a correction factor stored in a correction frame buffer 142. The frame buffer 142 can be comprised of conventional dynamic RAM, or static RAM, controlled by a frame buffer controller submodule (to be described in detail hereinafter) capable of storing complete frames of image data or image related data and capable of streaming data in and out at video rates. The correction frame buffer can also be comprised of non-volatile RAM. A corrections value for each pixel is stored in the frame buffer 142 which is brought into the correction circuit 140 from the frame buffer 142 in lock step with the sensor pixels so that each pixel may be custom processed with a unique correction value. The corrected pixel is coupled to an output 144, whereby the corrected pixel information is coupled to the next stage of the system as shown in Figure 2. For any particular application, the number of frame buffers used is a matter of optimization.

Another optional type of initial processing which may be utilized separately or in series with linear correction is multi-frame averaging. This type of preprocessing is applied if the image signal is very low resulting in a low signal to noise ratio. To correct this low signal to noise ratio, an averaging together of several frames of the images will improve the signal to noise ratio.

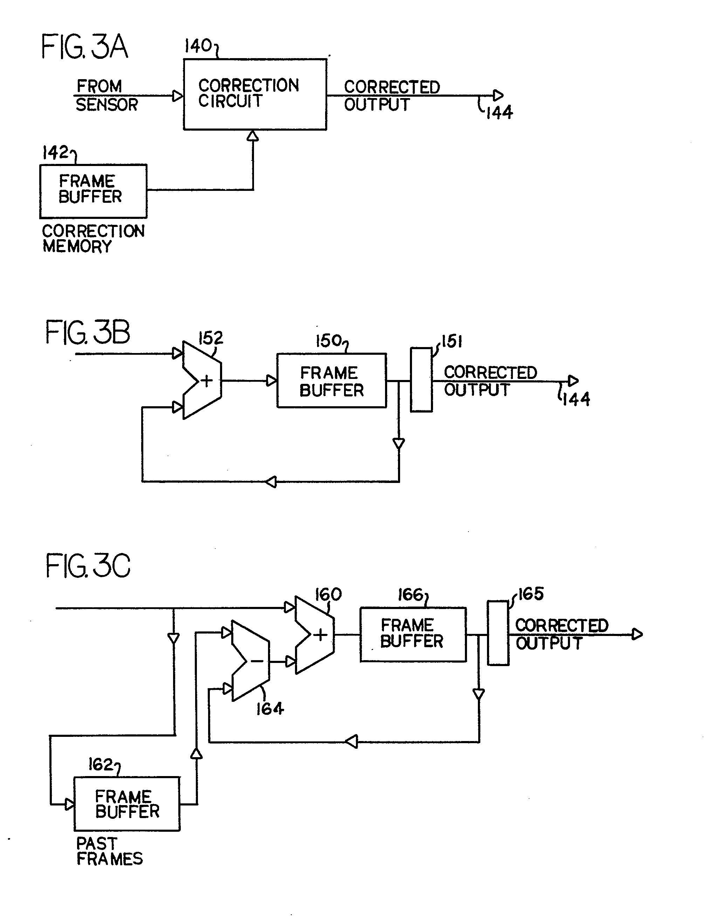

The circuit of Figure 3B is one embodiment of a method of averaging each new frame from the sensor 120 to a cumulative average image. Initially, the data in a frame buffer 150 is set to zero and then each successive frame of data is added together and stored. As many frames as desired may be summed, subject to pixel word size and overflow considerations, although in the preferred embodiment between two to eight frames provides acceptable results. Thus as shown in Figure 3B the digitized image signals are applied to an adder circuit 152 and the output of the frame buffer 150 is applied to a second input of the added 152. The adder 152 sums the incoming pixel with the sum of the corresponding pixels stored in the frame buffer to produce a new sum which is then stored in the corresponding location in the frame buffer 150. This process is repeated until the desired number of frames has been summed together. It should be noted that this circuit will result in a reduction in the frame rate equal to the number of frames which are summed. This is quite acceptable in many systems. The sum is then averaged by an averaging circuit 151 which logically divides the sum by the number of frames summed and the corrected output is then coupled to the output 144 to be applied to the next processing stage. This logical division can be effected by actual arithmetic division, or by normalization farther along the pipe.

The disadvantage of frame rate reduction that results from the preprocessing as shown in Figure 3B may be avoided by use of a multi-frame averaging system as shown in Figure 3C. In this system, the original sensor values which are summed in the averaging frame buffer are stored away in an additional frame buffer and after a delay of several frames are subtracted back out of the summed image. In this manner a new average frame result is produced for each frame at the original video rate containing the average of the last several frames.

Thus in Figure 3C digitized video data is applied to the input of an adder 160 and simultaneously applied to the input of a frame buffer 162, as shown. The frame buffer stores each frame of video information as it arrives and applies, after a delay of a desired number of frames, the delayed video information to the subtract input of a subtractor 164. The output of the adder 160 is applied to the input of the sum frame buffer 166 for storage, and the output of the sum frame buffer 166 is coupled back to a second input of the subtractor circuit 164, as shown. The output of the subtractor circuit is subsequently applied to the input of the adder 160. As a result the input signal applied to the adder 160 is added to the sum that is fed from the output of the frame buffer 166 after a properly delayed frame buffer signal is subtracted. Thus the second signal applied to the adder 160 constitutes the existing sum in the frame buffer 166 minus the video value from the oldest frame of video information that makes up the sum from the output of the frame buffer 166. The addition of new video information produces a new sum out of the output of adder 160 comprising the sum of values from the latest several frames. This sum is then stored in the frame buffer and the process is continued. The sum from the frame buffer 166 is then coupled to an averaging circuit 165 to produce a corrected output signal. The corrected output is a new average which contains the average of the latest several frames and which is generated continuously so that there is no loss in video frame rate.

An even more complex frame averaging approach may be utilized where it is desired to separately weight the images that are summed together. In this type of averaging circuit, a separate frame buffer is used to store each of a desired number of succeeding frames which are then added and averaged using a separate predetermined weight for each frame. After each frame a new frame is buffered into a frame buffer and the oldest frame of information is dropped out. Another optional circuit configuration that can be utilized is a modification of the circuit of Figure 3B to produce exponentially weighted image sums. In this configuration a divide by two circuit is added so that only half of the old sum from the frame buffer is added to each new frame by the adder 152. As a result an image sum with an exponentially smaller contribution from previous frames is obtained.

In most applications where averaging to increase signal to noise ratio is desired the simple structure of Figure 3B is most often suitable whenever a reduction in the frame rate is permissible. Where a

0205712

-16-

higher frame rate is desired, the configuration of 3C is
typically the most effective approach.

Referring again to Figure 2, the initial
preprocessing produces an improved video image stream
which is coupled from the output 144 of the initial
preprocessing stage 124 to the input of a median filter
170. The median filter 170 provides another stage of
preprocessing for correcting for another type of
distortion in the video image signal which may be caused
by small objects or details within the scene which
obscure the main data. This type of distortion is
generally characterized as high frequency noise which
affects single pixels in isolation. For example, small
highlights may cause a single pixel to go "off scale"
while all the pixels around are reading quite normal
values.

A method of filtering this type of noise
problem is to provide median filtering. In the
embodiment shown in Figure 2, a 3 x 3 median filter is
utilized to perform two dimensional filtering in which
the original pixel and its eight nearest neighbors are
sorted by their values and the pixel value that is in
the middle of the sorted list is chosen as the value to
replace the original pixel. A single unusual value
pixel is less likely to distort the output of the median
filter than with the use of an averaging filter. Thus,
median filtering is a powerful filtering technique since
it has less tendency to blur edges in the image. In an
alternative embodiment, a 5 x 5 median filter can be
utilized, or in general an N x N median filter can be
used.

The median filter normally outputs a single
8-bit byte corresponding to the 5th largest value of the
nine possible values. However, since other types of statistics, such as neighborhood minimum, neighborhood maximum, or any of the other values depending upon a desired bias, can be important to a specific application, the median filter is programmable through a processor interface to output any one of the nine possible values.

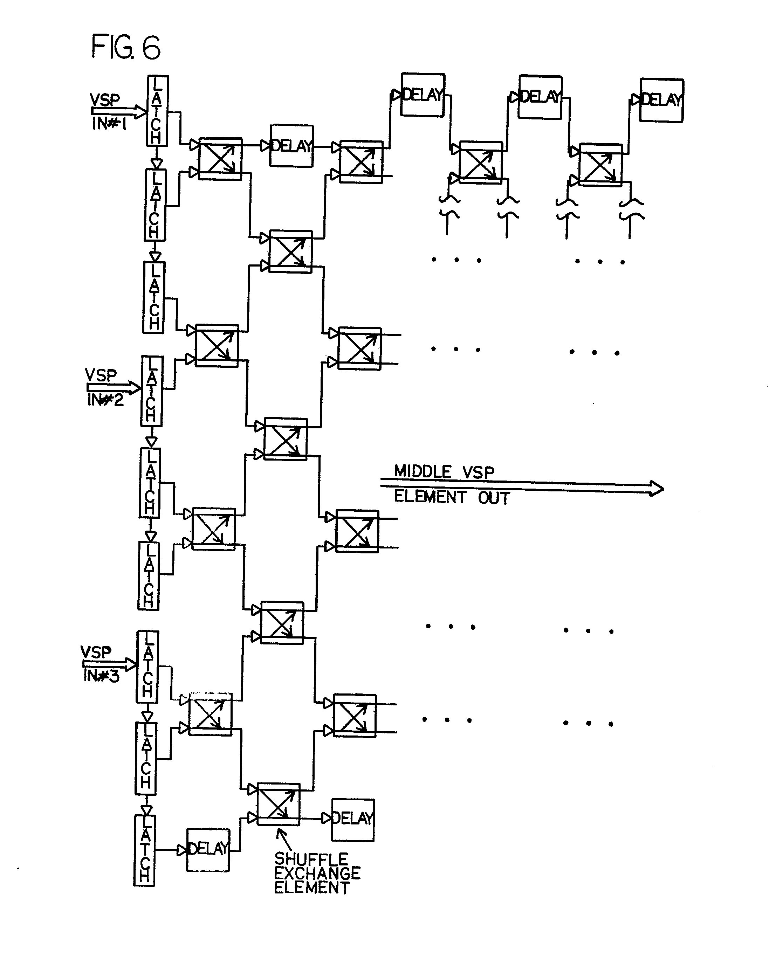

A suitable median filter circuit is shown in Figure 6 using a pipeline architecture so as to provide maximum speed of operation. The process of finding the median of nine possible numeric values is conceptually very straight-forward. The values are simply arranged in cardinal order, and the mid-value is the median. For example, if the values 1-9 were entered in some order, say 7 2 8 3 1 6 5 4 9, they would be reordered to 9 8 7 6 5 4 3 2 1, and the value 5 would be the median.

When applied to a 3 x 3 neighborhood the values arrive in the form of an array, such as:

$$7\ 2\ 8$$
$$3\ 1\ 6$$
$$5\ 4\ 9$$

In a picture environment such an array would be interpreted as three consecutive pixels on three consecutive lines. The resultant median, in this case 5, is the outputted new value at the location of the center value.

For the median filter 170 shown in Figure 2, two line-delay circuits 172, 174 are employed in parallel to set up the 3 x 3 window. The object of the delay lines 172, 174 is to provide a fixed delay of digital signals, measured in clock pulses, from the input to the output of the delay line. The length of the delay required varies from application to application, and in some applications the length of the delay requirement varies from state to state. For example, the VSP system often requires multiple lines of an image in parallel, but can access these lines only sequentially. Delay lines are used to provide the local line by line storage. The line length is fixed if the source is directly from a camera. If, however, the source is from a frame buffer, the line length may vary depending upon how much of the image is selected to be processed. This, and applications like it, demand a programmable length delay line. Thus, the delay line is programmable through a VSP control processor interface.

Additionally, for speed and compatibility reasons a byte wide data format is employed. In the illustrated embodiment, the delay lines 172, 174 are functionally N x 10 programmable shift registers which operate on 8-bit wide data bytes. In the preferred embodiment, the length N is variable from 3 to 512 unit increments and operates at clock rates to 20 MHz. In a specific circuit structure (not shown), data is entered byte by byte into an input register at the positive edge of the clock. This results in a fixed single unit of delay. As with most all of the VSP family, operation on more than eight bits of data can be accomplished by stacking subsystems. Thus, multiples of 8-bit data can be delayed by vertically stacking the delay line subsystems. Delays in excess of N can be accomplished by stacking the delay line subsystems horizontally.

In the above discussed embodiment, the storage of the data within the device occurs in a dual ported 512 x 10 static RAM. This can also be accomplished using two arrays of single ported RAM. For a given address, a byte is being written into one of the RAMs while the data of the previous frame is being read out of the other. This ping-pong arrangement provides maximum speed in that only one operation is being done per RAM per clock cycle. This operation results in a second fixed unit of delay.

The output of the appropriate RAM is then multiplexed and loaded into an output register. This operation results in a third fixed single unit of delay. These three units of delay define the minimum delay length of 3.

Programmability is determined by the number of sequential addresses generated in a 9-bit counter. During the "load address" time, a 9-bit word is serially loaded into the programmable counter at the clock rate. Alternatively, two 8-bit registers can be utilized. At the end of the load cycle, the address counter is set to address 0. Then, during the delay line mode, the address counter continually recycles from 0 to the pre-loaded count.

In the configuration shown in Figure 2 each line delay circuit 172, 174 provides delay equal to one horizontal line of pixels thereby setting up three parallel horizontal lines of pixels into the three inputs shown to the median filter 170. The three horizontal lines of pixels are clocked in parallel into registers in the median filter which then process a 3 x 3 window which moves one pixel at a time to process each window moving at single-pixel increments. The result of the median filter operation is a single-pixel stream output which is then coupled to a 3 x 3 convolve filter 180, as shown. The resulting edge-enhanced video stream is coupled from the output of the convolver 180 to a look-up table 190, as shown in Figure 2.

Subsequent processing which occurs after the described preprocessing can now determine the location or presence of such images as a desired rectangle. The output of the 3 x 3 convolve 180 is coupled as shown to a statistical subsystem 196 programmed to provide histogram information on the image. These statistics are fed to the microprocessor through the VSP control processor interface previously described, and used by the processor to perform control functions such as to control the filters 170 or 180 or look-up table 190 or to control the processing in the actual image processing stages.

The output of the look-up table 190 is also coupled directly to a 2 x 2 binary average down circuit 200 which reduces the amount of data to be processed by a factor of 4 by averaging 2 x 2 windows to individual pixels in a conventional manner. The output binary data stream from the 2 x 2 average down circuit 200 is applied, as shown, through a binary packer 205 and therefrom directly to a frame buffer 210 where the image is buffered for further processing. Alternatively, the look-up table 190 and 2 x 2 binary average circuit 200 can be replaced with a gray scale average circuit followed by a look-up table, which in many circumstances provides a more accurate output at a cost of added complexity.

The image data stream is read out of the frame buffer 210 and applied to the input of a series of VSP correlators 212 through 218 and to the input of a frame buffer 220 as shown. The output of the frame buffer 210 is also coupled to a series of line delay circuits 223, 225, 227 which provide an image data stream to each subsequent VSP correlator which is delayed by one complete horizontal pixel line. This parallel structure is utilized in order to provide high speed pattern recognition capability.

In operation the image frame buffer 210 sends out an image which is coupled to the line-delay circuits

0205712

-21-

223, 225, 227, as shown. The line-delay circuits each delay by one horizontal line, so that after three lines have been read out of the frame buffer 210, the first line begins to be coupled to the VSP correlator 212. In this way, the correlation is performed in parallel on the image four times, with each image offset vertically by one horizontal line. Once all the VSP correlators have image data coupled to them, the mask pattern data is coupled simultaneously to each so that the correlation proceeds in parallel. Any number of correlators may be used in this manner. Binary correlation is well known in the art.

In the illustrated embodiment binary masks are placed in the pattern frame buffer 220, the processor then determines the first possible position of the mask within the candidate image, and then generates successive pattern and image data addresses. The data are compared and tallied with eight sequential horizontal mask locations being tallied in parallel. Each VSP correlator will run completely through the mask once. Then the VSP correlator can report all eight tally results for the current mask position to the microprocessor, or compare the eight results to the two best matches previously found by the correlator, updating the two best match values as necessary. The precessor will keep the best of these, and increment the mask location to the next possible set of eight mask positions. This process continues until all possible mask positions have been checked, at which point the microprocessor will have the best match location and value. In the illustrated embodiment multiple correlators are used in parallel so that multiple locations within the image can be matched at once.

Even though the VSP correlator is configured to
process binary data, gray scale correlation as well as
other operations can be performed by representing the
mask and image as multiple binary image planes in which
each has a different (power of two) weight. The VSP
correlator subsystem can be provided with the additional
ability to do generally binary ALU operations, on the
incoming data before tally, plus shift and negate
functions on the partial tally results.

As an exemplary application of the system of
Figure 2, the VSP correlator system made up of VSP
correlators 212 through 218 is preprogrammed with
prestored images of rectangular corners with a minimum
size which in the preferred embodiment is at least
eleven pixels on a side for every possible angle of
orientation. This technique has the advantage of being
size independent for detecting a rectangle. Once the
corners have been detected, the microprocessor sorts
through them to find four that match up to form the
rectangle desired. For each possible angle the
microprocessor finds all possible reasonably large
corners in the image at that angle placing them in
buckets sorted by angle and then sorts through to remove
duplicates. In order for a particular corner to be part
of a rectangle, the two corners neighboring this corner
must somewhere appear upon two lines defined by the 90
degree sides of the corner. Thus, for each corner, the
system searches along these lines for corners at
compatible angles. If none are found, the corner is
discarded, and if two correct corners are found, a
rectangle has probably been located and the system
searches for the fourth corner. After all corners have
been run through the process, a list of possible
rectangles is created. These potential rectangles are processed to determine if they have the proper width to height ratio for the desired rectangle, and may be further processed to determine if the object looks like a rectangle by following the edges as determined by the corners. Other tests may also be performed by the processor, if necessary, to identify the desired rectangle. It may also be necessary to allow even fairly marginal corner candidates to be brought under consideration. A strength weight is attached to each corner, and for each potential rectangle found, the one with corners having too low of a total weight are thrown out. By appropriate programming, the system of Figure 2 can perform numerous other video processing tasks.

In addition to the VSP correlator circuitry the output of the frame buffer 210 is also coupled directly to a blob analysis circuit 221 as shown in Figure 2.

Blob or connectivity analysis is a necessary prerequisite to the understanding and subsequent decision making on images which involves correctly labeling the different regions within the image. For example, an all-dark image containing a single light hole is an image containing two regions. The video stream processing system may be required, for example, to verify the location and area of the hole. To perform that task the system must first determined what is, and is not, a hole.

Referring again to Figure 2, there is shown, coupled to the output of the frame buffer 210, an example of a secondary processor interface 270, which permits coupling of binary image data from the frame buffer 210 to a secondary control processor separate from the image processing system. The secondary processor may then use the data from frame buffer 210 as well as information coupled from microprocessor 130 for further signal processing or for control decisions in an overall system which utilizes the image processing capability for decision making. For example, the secondary processor may be the controlling computer in an automated manufacturing system which utilizes pattern recognition.

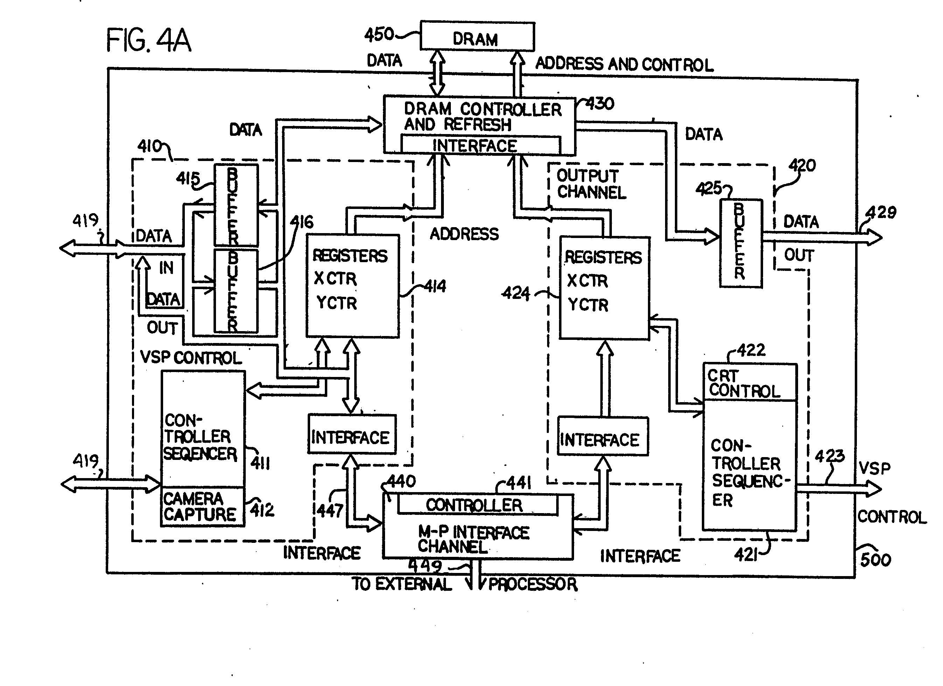

Referring now to Figure 4A, the interior detail of the frame buffer controller (FBC) is shown. The FBC is utilized in conjunction with DRAM to form the frame buffers described hereinbefore. The video input interface channel 410 is programmably bidirectional, and can input or output VSP streams to or from DRAM. The VSP video output interface channel 420 can only output. The DRAM controller interface 430 provides bidirectional interface i.e., such as control, address and data signals, to the DRAM 450 where the data pixels are actually stored. The processor interface 440 provides a bidirectional interface with an external processor.

Each of these four interface channels has a particular controller associated with it. The microprocessor interface 440 has a microprocessor interface control section 441, the output channel has an output channel controller 421, 422, the input channel has an input/output controller 411, 412, and the DRAM interface 430 has a DRAM controller including refresh control for communications with the DRAM 450.

The interior detail of the channels includes interfaces to the other interface channels with which they communicate. The input and output channels have data and address communications lines to the DRAM controller, and the input and output channels also interface with the microprocessor controller. In addition, there are a number of registers in each of the input and output channels. There are a number of registers that control the sequencing of addresses to the DRAM 450 via the DRAM controller 430 to cause windows of data to be stored in DRAM 450 in sequential addresses and output from sequential addresses. Each channel has a control sequencer 411, 421 to help in the sequencing of this control. The output channel also has a CRT controller section 422 that allows the VSP handshake to be modified to be compatible with a video standard, such as NTSC, PAL, etc. The CRT controller is programmable to provide any of those standards in terms of vertical and horizontal blanking signals.

Within the video input channel 410 there is camera capture logic 412. By programming some of the video input channel registers 414, the FBC can accept non-standard inputs (i.e., non-VSP protocol) via the video input interface. The blanking information provides an extra boundary of no information around incoming data. In addition, there may be other circuitry outside the FBC to condition signals coming directly from a CRT, i.e., synchronization signals which must be stripped and converted into the handshake signals.

The function of the video input channel in its input mode consists of receiving pixel data and sending it to DRAM controller 430 with address signals for storage in the DRAM 450. There are a plurality of registers 414, all of which can be preloaded by the microprocessor via the microprocessor interface 440. The microprocessor can preempt whatever else the video input channel is doing and reset it. Many of the registers 414 are multiple byte registers, and there are various modes for step-loading successive bytes into the video input registers, as opposed to separately addressing each byte of the registers. The registers are for storage of data, control, mode status bits, addresses, and interrupt status and pointers.

The microprocessor interface channel 440 interfaces to the video input and output channels are bidirectional. All of the registers 414 and 424 are set up by the microprocessor or via a control sequencer in one of the input or output channels. To facilitate sequencing of image processing, most of the registers . 414 and 424 have a shadow value register and a working copy value register. The microprocessor writes a copy of certain registers to the shadow value registers--i.e., the registers that are to be utilized during the next frame of processing. The microprocessor has the time needed for the current frame of processing to load the control information for the next frame in the appropriate registers. Upon completion of the current frame, the channel transfers the control information in the shadow registers into the working registers, and then proceeds to work with these new control values. The microprocessor cannot directly access the working registers. This is important in implementing asynchronous clocking to allow independence of clocks for the input and output channels as well as the microprocessor channel.

The following is a description of the main function of the x and y counter registers. The x and y counter registers cause relative window addresses to be derived, i.e., generated. These addresses are sent out as the address information to the DRAM controller 430 on the bus 431. It is the responsibility of the controller sequencer 411 within the video input channel 410 to start up the channel at the appropriate time as programmed by the microprocessor (not shown).

The control sequencer 411 responds in accordance with the content of the control information loaded into the registers of the video input channel. The microprocessor can cause the video input channel 410 to start, under the command of the video input control sequencer 411. The microprocessor interface 440 interconnects to the video input control sequencer 411, via the video input channel's registers 414 through which the microprocessor can control when the input channel 410 starts. Among other things, the input channel can be instructed to continuously start at the beginning of each successive frame. This eliminates the need for any further control information from the microprocessor to control the starting time of the input channel. The control sequencer 410 will cause the x and y counters to be loaded with appropriate initial values, and will load the rest of the registers 414 to start. The input channel will then await the appropriate synchronization signal to appear on the VSP control bus 22'. When a valid beginning of frame synchronization signal VSYNC appears on bus 22', the x and y address counters begin counting thereby generating addresses which are sent on the bus 431 to the DRAM controller 430. Simultaneously, the input channel 410 causes the incoming pixel data to be latched into the DRAM controller 430 temporarily on its way to storage in the DRAM. The DRAM controller 430 must be capable of buffering several pixel values before doing an I/O operation with the DRAM memory 450.

When the raster scan reaches the end of a line, this fact is indicated by the x-counter reaching a count indicating that the end of the line has been reached. There are different ways to implement this function. A separate counter can count how many pixels have arrived so far and compare the count to a fixed count stored in another register. At that time the x counter can be reset and the y counter incremented to the value for the next line. This can be done by storing the offset value from one line to the next in a single address register and adding this value to the y address. This sequence of events when the control sequencer 411 senses the end of line synchronization signal VSYNC has arrived on the bus 22' from the image acquisition system 20. The controller sequencer 411 can start sending the pixel data and addresses for that line to the DRAM controller 430.

In between the end of one line and the beginning of the next, the control sequencer 411 will force the processing to stop and causes the video input channel 410 to be inactive if any more data arrives on the bus 22'. The controller sequencer 411 holds down a pixel pause line (not shown) and sends a signal (not shown) to DRAM controller 430 allowing it do refresh of the dynamic DRAM 450. The controller sequencer 411 takes into account the length of the signal lines, and how much DRAM 450 there is, and how much time there is in between the raster scan lines. This is done to minimize the amount of refreshing done for power consumption and overhead time consumption reasons while still providing enough refresh to maintain the valid pixel data in the DRAM.

The microprocessor loads a particular register in registers 414 with data which specifies the amount of data storage space in the RAM 450 that the FBC 500 is addressing. The microprocessor also loads a register in registers 414 with information which indicates what type of DRAM is being used, i.e., characteristics for that type of DRAM, and to indicate the clock speed. All of the decisions the controller sequencer 411 makes as to how often refresh is needed depend upon the clock speed.

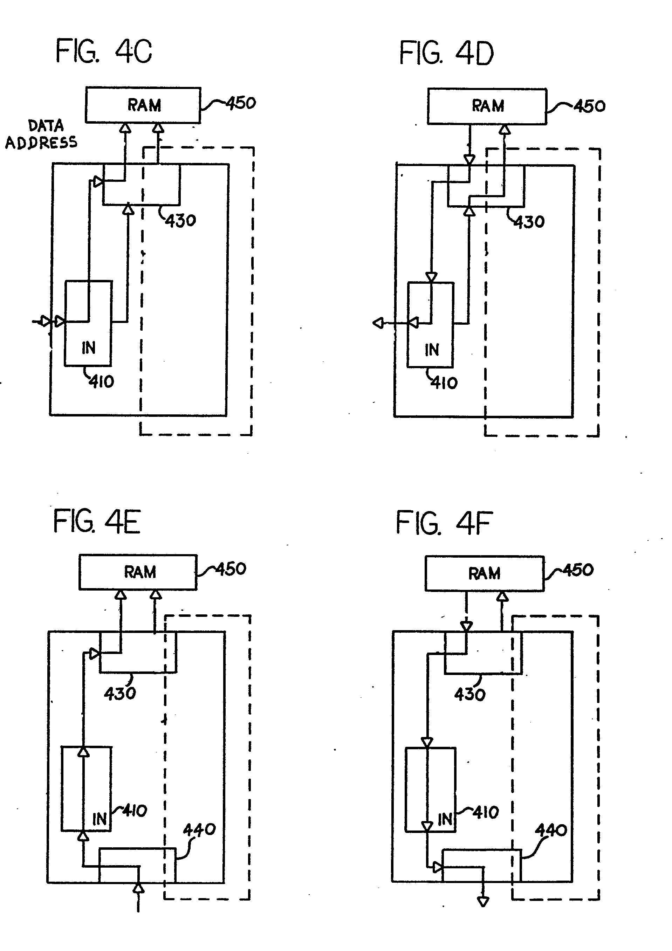

The discussion above describes the input channel 410 acting as a unidirectional path to store the incoming pixel data in the DRAM 450. The data flow for this mode of operation is shown in Figure 4C.

The VSP handshake or protocol control signals for exchanging information are received by the controller sequencer 411. The camera capture logic 412 converts video signals from the camera into control signals used in the VSP information interchange protocol. The pixel data arriving on the bus 22' is buffered in a buffer 416 before being sent to the DRAM controller 430 where there is further buffering. In fact, depending upon the pipeline, there may be several different buffers. Data recalled from the DRAM 450 for transmission on the bus 22' is buffered in a buffer 415. The buffers 415 and 416 also function to buffer data for the microprocessor interface 440, through multiplexers (not shown). As illustrated these buffers 415, 416, couple to the DRAM controller 430 via a bus 445 and to either the VSP input/output data on the bus 22'or to the microprocessor input/output data on the bus 36'. This latter connection is done via the microprocessor controller 441, the bus 447 and the interface 443.

Now referring to Figure 4C, there is shown the data flow for pixel data entering on the bus 22' and passing through the input channel controller 410 on its way to the DRAM controller 430 for storage in the DRAM 450. Figure 4E illustrates the data flow for the situation where pixel data is being transmitted to the DRAM 450 from the microprocessor (not shown). In this situation data comes in on the microprocessor interface bus 36' and is coupled through the input channel 410 to the DRAM controller 430 and from there to the DRAM 450. Much of the protocol sequence and address generation is performed in the same way as described before for the situation where the pixel date arrives on the bus 22' to the input channel 410. The only difference is that there is no end-of-line or end-of-frame sync signals generated by the microprocessor. Rather, the microprocessor limits the amount of pixel data transmitted to a a given size which can be handled by the FBC and DRAM, and transmission proceeds until the entire block is sent.

Since the input channel can only receive data from one input bus at a time, the FBC can operate in only one of the described modes for receiving pixel data at any one time.

The FBC VSP video input channel 410 can be used for output, as shown in Figure 4D. The control and protocol signals are still generated in the control sequencer 411 in essentially the same way as previously described for the input mode of Figure 4C. The difference is that the FBC is reading pixel data from the DRAM 450 as opposed to writing pixel data to the DRAM 450. That is, the same registers 414 and counters in the input channel 410 are utilized and they still perform in essentially the same way. Obviously since the same registers and counters are used for input and output, only input or only output can be performed at any one time via the video input channel 410. For data output from the input channel 410, the data coming from the DRAM 450 is transmitted via the DRAM controller 430 and the video input channel 410 out on the bus 22'. Because the FBC is now transmitting on the bus 22' as opposed to receiving, the handshake or protocol signals are different in this mode of operation. The control signals lines, which for input mode, were input lines now become output lines and are driven by the bidirectional line drivers (not shown) in the video input channel 410.

In a similar manner, as shown in Figure 4F, the pixel data from the DRAM 450 can be output through the microprocessor interface channel 441 as opposed to being output via the video input channel 410. In all other ways, operation is nearly identical to that just described for the output mode of the video input channel 410. The main difference is that while the output data is still buffered via the video input channel 410, instead of being latched in the VSP video input port 419 for transmission on the bus 22', it gets latched in the microprocessor interface port 441 for transmission on bus 36'. There are two unidirectional signals which functionally replace the pixel hold signal from the video input channel 410. One signal (not shown) is from the microprocessor interface 440 to the input channel 410 to cause output from the input channel 410 to the microprocessor interface channel 440 to be frozen. The other signal (not shown) is from the video input channel 410 to the microprocessor interface 440 indicating the output data from the input channel to the microprocessor interface channel 440 is not ready. The microprocessor can stop data output from the FBC to the microprocessor by asserting a "not ready" signal or pixel hold signal (not shown) indicating that the microprocessor has not requested the next byte of data.

The selection of which of the four modes of operation illustrated in Figures 4C-4F is chosen is done under the control of the microprocessor via the microprocessor interface 440. This is done by loading a specified code in one of the registers 414 which indicates the desired mode. The control sequencer 411 then reads the code and sets up to operate in the indicated mode. This code is stored a configuration register (not shown) which, along with a control register, stores data which defines the mode of operation of the FBC.

In the modes of operation illustrated in Figures 4C and 4D, the input channel 410 is busy doing I/O operations on the pixel data via the VSP input channel 410, and therefore the microprocessor is prevented from having access to the pixel data in the DRAM 450. The microprocessor is not totally locked out of the DRAM 450 however, since it still may interrupt the I/O operations by the input channel 410 and change the mode of operation such that the microprocessor can itself do I/O operations on the pixel data through the input channel. However, the microprocessor is allowed to read status registers (not shown) in the input channel 410 during such input channel I/O operations. That is, the microprocessor can check status information, and can write the next control data into the shadow registers while the video input channel 410 is performing input or output operations.

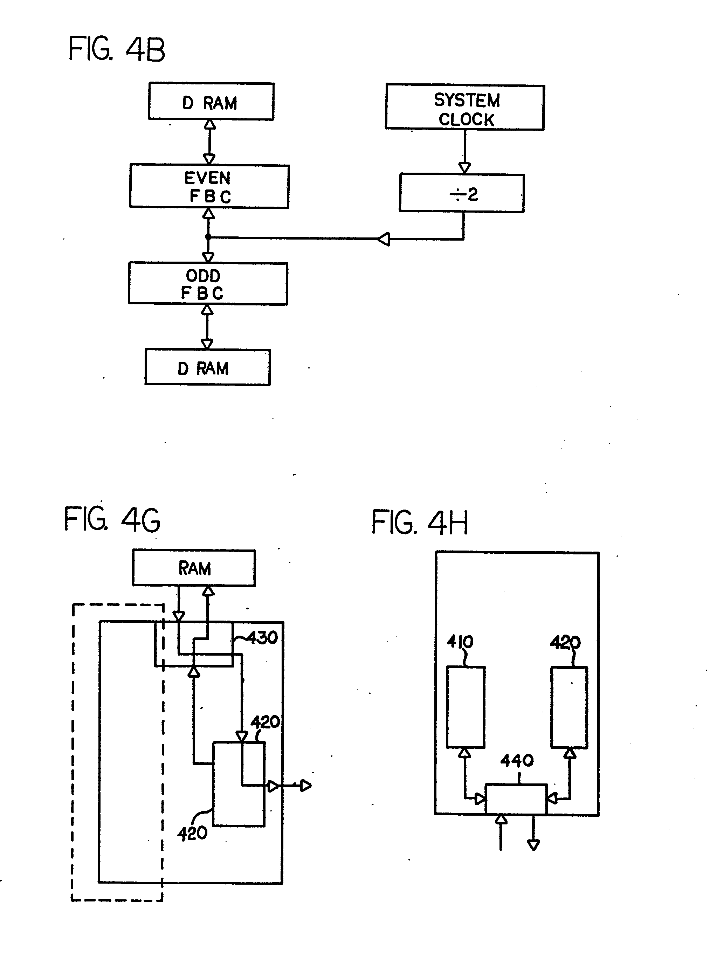

Data flow during the operation of the output channel 420 is illustrated in Figure 4G. This operation is very similar to the operation of the input channel 410 performing as an output channel as illustrated in Figure 4D. That is, addresses for the read operations done by the DRAM 450 are supplied via the bus 433 to the DRAM controller 430 for supply to the DRAM on the address and control bus 451. The returned pixel data is sent via the data bus 453 through the DRAM controller 430 to the output channel 420 via a bus 435. Again, as in the case of the input channel, the output channel 420 has its configuration and control registers in the register group 424 loaded with configuration and control data from the microprocessor. The data flow during register 424 loading or reading by the microprocessor is as shown in Figure 4H.

Once the output channel 420 starts operation, the output control sequencer 421 loads the initial x and y address counts in the counters, and sends that information to the DRAM controller 430 via the address bus 433. The DRAM controller 430 then reads the pixel data at the initial x and y address and sends it to the output channel 420 via the bus 435. The data is temporarily stored in the buffer 425 while it is waiting to be sent out on the bus 429.

At any time under the rules of the VSP handshake or protocol for information interchange, any VSP subsystems which are receiving the pixel data from the output channel 420 can cause a pixel hold by keeping the pixel valid signal high. This will cause the data output from channel 420 to pause until that VSP subsystem releases the pixel hold, indicating it is ready to receive more data. The output channel control sequencer 421 will respond to the pixel hold by freezing transmission of pixel data by the output channel 420 temporarily until the hold is released. There is no loss of data caused by the hold either during input or output.

The DRAM controller 430 monitors refresh, and if necessary to preserve data integrity, will perform refresh at any point during scan of a line, without causing loss of data or loss of synchronization. The VSP protocol is defined such that any pause in the data stream transmission starts with the next pixel and not with the current pixel. This greatly simplifies pipelining and prevents loss of data.

The output channel control registers 424 have end of the line address limits which, when reached, cause the DRAM controller 430 to go into refresh mode. When the limit is reached, a signal is sent to all VSP subsystems or processing elements coupled to the output bus 429, which indicates that no more data will be sent for that particular line. The output channel 420 controls the VSP control lines in the bus 423 and drives them appropriately to implement the information exchange protocol.

Upon reaching the end of a line, the output channel 420 increments the y counter to generate the starting address for the next line, and then loads the new y address from registers 424 into the DRAM controller 430. The DRAM controller then begins read operations for the pixel data of the next line at this new y address. The x address will be derived from the x address counter which is reset at the end of every line.

These read operations will continue until the end of the last line in the frame is reached. At that time the x and y addresses will indicate the end of the frame has been reached and the output controller sequencer will generate and send the end of frame synchronization signals on the bus 423. The output channel 420 can be programmed to assert an interrupt signal on the bus 36' (not shown) to the microprocessor at the end of each frame. The same is true in the input channel 410; it also can interrupt the microprocessor at the end of each frame. The channels could also be instructed to generate an interrupt at the end of each line.

These interrupts are maskable. The FBC's operation can be programmed by control information from the microprocessor such that when an end of frame event occurs, the output channel 420 takes the next frame control data from the shadow registers in register group 424, as loaded by the microprocessor during the processing of the previous frame, and loads that control data into its working registers and proceeds with processing. The interrupt to the microprocessor at the end of a frame signals that the current frame has been processed and the contents of the shadow registers have been loaded into the working registers and processing is continuing. The interrupt also signals the microprocessor that it is time to load control data for the next frame into the shadow registers. If the microprocessor has not finished loading the control information into the shadow registers when the end of frame occurs, there is a control signal which is sent to the output channel 420. This signal indicates that the output channel should not load the contents of the shadow registers into the working registers immediately until the microprocessor is finished loading the shadow registers. Analogously, the same interrupt and transfer protocol exists for the input channel 410. In the preferred embodiment, the FBC 500 is a single VLSI integrated circuit.

One of the fundamental operations that must be performed in doing graphic and image processing in frame buffers is the provision of dual ports for the memory. It is so fundamental that some manufacturers have gone to the extreme of dual porting the RAMs chips themselves, which is relatively expensive. The FBC 500 performs the same function in conjunction with standard DRAM.

The FBC directly controls the DRAMs using nibble mode for very high throughput and performance. Referring to Figure 4B there is shown a configuration for a double pixel-wide access on every DRAM cycle. Thus a four cycle nibble mode access transfers 8 bits of information via the controller 430 on every cycle. Every external memory cycle is dedicated to either the input channel 410 or the output channel 420. Preferably, each memory cycle is alternatively dedicated to first the input channel and then the output channel in order to perform interleaving and to avoid conflicts between the input channel 410 and output channel 420. There is sufficient memory and bus bandwidth such that both channels can be running at full speed doing I/O operations without restriction. There is no delay because for each channel 410 and 420 accesses only 8 bits per cycle, while the memory interface is 16 bits wide. Alternatively, the microprocessor can be reading or writing the DRAM at full speed through its 8 bit interface 440, while the output channel is transmitting data at full speed on the bus 429.

When outputting video data to a CRT, it is important to be able to keep the video data stream to the CRT uninterrupted even though other I/O operations are being carried out by other interface channels with DRAM 450. Since it is not always possible to wait for the blanking interval during the flyback time to do I/O operations between the DRAM and the other interfaces, dual porting is an important feature to alleviate this problem. Conventional single ported DRAMs can be utilized with the FBC, and by the above described techniques of double wide DRAM ports compared to the word length of the pixel data, effective dual porting can be achieved using standard off the shelf RAMs. This solves the CRT continuity of data problem and allows both input and output channels to be running continuously without restriction and at much lower cost than using double ported RAM chips. That is, by using 16 bit word length RAMS and accessing the RAMs in nibble mode, an effective dual port is achieved by the FBC.

In addition to the dual port operation of the RAMs, the FBC also provides CRT control, sequence control, and window control. The only penalty paid for the use of nibble mode and interleaving is that there is latency in terms of initial DRAM access, i.e., there may be some initial delay in gaining access to the DRAM 450 while the memory cycle devoted to the other channel is completed. However, since substantial use of pipeline architecture is used in processing subsystems throughout the VSP system, small delays of this sort are not a problem. To illustrate this latency concept, the microprocessor often accesses the RAM to read or write a single pixel. The worst case latency would be a delay of 8 clock cycles in order to be able to access the desired information. This is 800 nanoseconds in the preferred embodiment. If higher throughput RAM is coupled to the FBC, the delay can be reduced. Generally, this worst case scenario will not happen since in most applications, the microprocessor will transfer out a portion of the data in the DRAM at a higher rate and process it via its own memory channel and scratchpad memory. In this case latency is not a problem.

Within graphics applications it is often desirable to utilize read masks and write masks on pixels. When accepting pixels in or sending pixels out, it may be desirable to zero out certain bits within a pixel or pixels. This can be accomplished via a write mask or read mask in the FBC. Alternatively, this can be easily performed externally via a lookup table. Thus, the system can selectively ignore certain bands of pixel data. This is quite useful for showing different layers in computer aided design (CAD) applications, for viewing multiple sources of data, and for multiplexing additional information or pictures onto a screen. Utilizing this technique, the system can write a different layer of an application on the screen without disturbing other layers in between. This is very useful in CAD.

Because of pin limitations, in the preferred embodiment, there are only two write strobes out of the DRAM interface 430, allowing selective write to either of two pixels or to both at once. Since two pixels are written at once, each bank of memory should be separately controllable to allow access to individual pixels. A mask is provided to allow access to a single bit within a window of pixel data stored in DRAM, such as to selectively write only certain bits within the boundaries defined by the FBC. Alternatively, this bit mask could be added via a single external latch that is written to by the microprocessor. However, a read mask does not require any additional pins, and can be accomplished in the FBC before the data is output from the FBC.

The FBC has the capability, via loading the zoom control registers within register groups 414 or 424, to automatically replicate pixel data to implement a zoom function. That is, individual pixel data stored in the memory 450 is replicated or blown up to fill many physical pixels on display. This is quite useful in many applications when trying to see crowded images more clearly. It is particularly useful when actually viewing live digitized data at zoomed resolution.

The zoom output is implemented by the FBC 500 by reading pixel data from that buffer 425 under the control of the control sequencer 421 of the output channel 420. The controller sequencer reads the zoom data loaded by the microprocessor from the zoom register to get instructions on the desired zoom. The zoom data specifies to the control sequencer 421 how many times to replicate each pixel and output it from the buffer 425 before the next pixel data is loaded into the buffer 425 so as to accomplish the zoom.

The zoom functions allow pixel replication by any integral multiple and independent x and y zoom functions. In the illustrated embodiment, a pixel can be sent out 1, 2, 4, 8, . . . up to 256 times, for x zoom. For y zoom, which is independent of x zoom, the system retransmits a whole line.

There is another way to achieve the same function. Sometimes there is a need to process the same line several times before going on. There is an end of line protocol provided to control this processing. To do this, the end-of-line signal is fed back to the FBC, to signal the FBC to repeat output of the same line without incrementing the y-address counter to cause retrieval of the next line of pixel data from the DRAM 450. The FBC will then go into the refresh mode, and then re-transmit the same line.

For both the video input channel 410 and the video output channel 420, the respective controller sequencers 411 and 421 interconnect to all other blocks within the respective channel. In the illustrated embodiment, some of the CRT control 422 is merged into the video output channel controller sequencer 421.

In the illustrated embodiment, the frame buffer controller operates in a video stream processing environment handling video information digitized with up to 8 bits per pixel. The basic functions of the FBC include:

1. Input picture (frame) from some video source, such as a camera.

2. Store the frame(s) in up to an 8K x 8K x 8-bit pixel buffer (external DRAM).

3. Allow microprocessor access to pixels in the frame buffer.

4. Output the frame or portion (window) to some video destination.

5. Special case CRT mode: Output frames in CRT format directly to CRT.

6. Keep the external DRAM refreshed.

The video output interface may be connected to any video destination, such as a CRT, or to the input of some other VSP subsystem. The memory interface may be connected directly to 64K or 256K dynamic RAM (with nibble mode capability) or to a memory system (with nibble mode capability). The microprocessor interface is suitable for connection to any modern microprocessor, such as the 16000 family from National Semiconductor or the 68000 family from Motorola. The FBC is fully programmable and provides the functions and features required of a digital image memory subsystem. In a preferred embodiment, the FBC is also scan testable.

The FBC in conjunction with external dynamic RAM, as illustrated in Figures 4A and 4B, and can provide:

1. Up to 8K x 8K x 8-bit pixel data storage usable as one large image, or several smaller images;

2. Up to 10MHz video pixel rate when operating
   with a single FBC;
3. Up to 20 MHz video pixel rate when 2 FBCs
   are used in tandem mode;
4. Asynchronous interfaces, i.e., pixel rate in
   need not match pixel rate out;
5. Video frame may have two (2) interlaced
   fields, for input and output;
6. Video output synchronization signals are
   programmable as to horizontal and vertical
   sync pulse delay and width;
7. Microprocessor interface includes direct
   memory access to frame buffer memory;
8. Pixels can be 8 bits or a multiple of 8
   bits-the latter by synchronizing the FBC to
   run synchronously and by tying the control
   signals defining the protocol together-this
   parallel architecture can be done alone or
   in addition to the tandem mode of operation
   shown in Figure 4B.

The FBC can work with packed, as well as unpacked, binary pixel data, providing compatibility with gray scale operations and bit mapped graphic output devices. Packed binary pixels data refers to packing 8 binary pixels of one bit apiece into a single 8 bit byte of VSP data.

The FBC video input and output ports can deal with non-standard video data streams. The VSP input channel can accept the output from an analog to digital converter with sync stripped so that the FBC can act as the first level transformation device for accepting and buffering video input data. The VSP input channel can also act as a bidirectional port, providing for either input or output of video data. The VSP output channel can transmit data to another VSP subsystem with a
suitable information exchange protocol or can transmit
video data directly to a CRT using two of the handshake
signals as sync signals for horizontal and vertical
synchronization.

The VSP input channel can only store video data
in the RAM. The video data can be output either through
the VSP output channel or the VSP input channel when
acting as an output port or can be transmitted to the
microprocessor through the microprocessor interface.
Additionally , the FBC can be output data
simultaneously from different RAM locations via both the
output channel and the input channel acting as an output
port each channel sending different addresses to the
DRAM controller 430 via the buses 431 and 433.The FBC
provides the ability to take an array of video data in
the DRAM and do a stream to rectangle and rectangle to
stream conversion of data going in and out of that DRAM.

The FBC can store one image up to the size of
external DRAM attached, or it can store multiple images
of a smaller size. The FBC can be used to "grab" one
frame from a video source, such as a camera, and then
repeatedly output that frame to some video destination,
such as a CRT. Non-standard video input can be
converted to standardized video output, and vice versa,
by the FBC. The FBC can also continuously "grab"
multiple frames, store them in the same part of memory,
but overlay the frame data as new data from each new
frame as it enters. Again this frame area may be
repeatedly output, possibly with entirely different
characteristics such as a different frame rate, pixel
rate, line length, frame length, or interface protocol.

If the video source may supply frames in a two
field interlaced format, the FBC can de-interlace them and store the frame in continuous memory locations. In the special case CRT mode, the output may be interlaced and the necessary synchronization pulses may be provided by the FBC to directly drive a CRT or equivalent display.

The FBC can work with sub-images. That is, it can output a rectangular "window" from within the stored frame. Any window from 1 x 1 up to the full frame may be specified. Also the FBC can input a rectangular window within a previously stored image.

There are a number of interface registers in the FBC which can be loaded or read by the microprocessor. In addition, the FBC includes working registers, which cannot be accessed by the microprocessor, and which duplicate most of the interface registers accessible by the microprocessor. The FBC uses the working registers to process a given frame while the processor may load the equivalent interface register in preparation for the subsequent frame. The contents of each interface register are transferred to the working equivalent under the control of a semaphore handshake mechanism between the microprocessor and the FBC. Since the FBC handles the video input interface, there is a separate set of handshake flags for each of these.

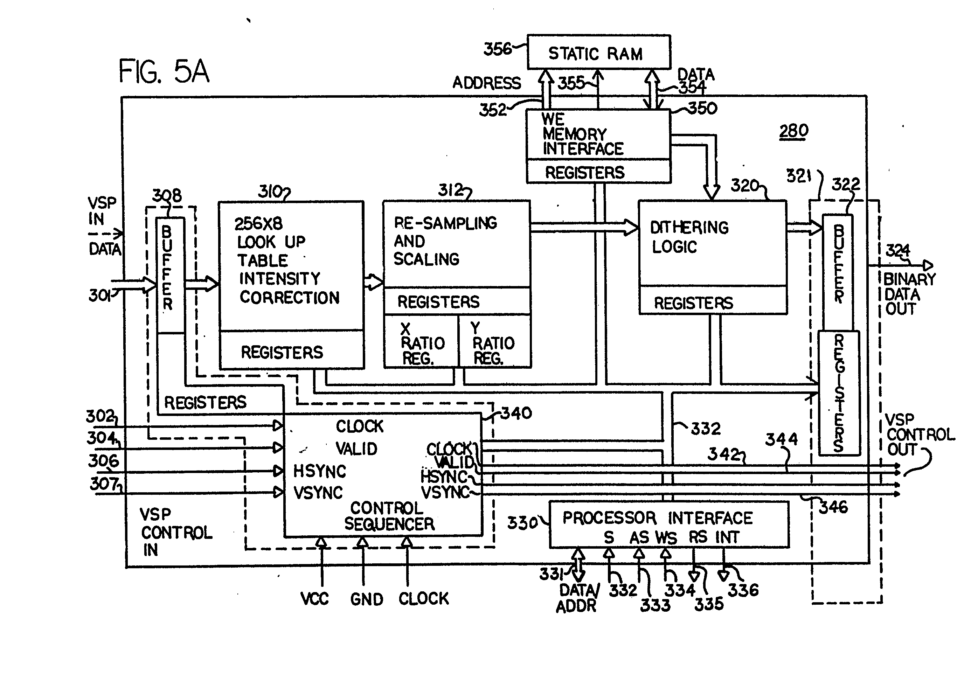

A dither circuit 280 is shown in greater detail in Figure 5A. The dither circuit 280 in Figure 5A has a VSP input bus as described in conjunction with Figure 1B comprising an 8-bit pixel data input bus 301, a PIXEL CLOCK input 302, a PIXEL VALID input 304, a horizontal synchronization signal HSYNC 306, and a vertical synchronization signal VSYNC 307, as shown. The 8-bit video data is latched into an input buffer 308 of the input interface 26'.

The incoming pixel data is then applied as an address to an intensity correction lookup table 310 stored in ROM or RAM which retrieves a preprogrammed intensity value for that particular pixel data bit combination and drives the new intensity data onto a bus 311. In many cases it is necessary to have the pixels of an image normalized, clipped, gamma corrected, or otherwise processed. Additional processing may be necessary due to nonlinearities in the output display device. It is for this purpose that the intensity correction look-up table 310 is provided. The intensity correction table is a 256 x 8 RAM which is loaded with correction values by the microprocessor 30 in Figure 1A through the microprocessor interface 28' and the internal bus 332. The start address for loading correction values into the table is written to the registers of the intensity correction table 310. Thereafter, 256 bytes of correction information are written to the table 310 in sequential locations starting with the starting address. The intensity correction process can be enabled or disabled by the setting of a flag by the control processor 130. When intensity correction is enabled, each pixel value arriving at the input interface 26' is used as an address for retrieving a correction value from the table 310. The resulting 8-bit data from the table 310 is the intensity corrected pixel. This intensity corrected data is coupled directly to the resampling scaler 312 via the bus 311.

After intensity correction, the corrected video data is coupled to a resampling and scaling circuit 312 which scales the image in accordance with x and y ratio data stored in the x and y ratio registers which are part of the logic of block 312. The data in these registers is supplied by the microprocessor (not shown) through the processor interface 28' and the bus 332.

Because the incoming image is often too small to be used directly, it is preferable to be able to stretch the picture in the x and y dimensions to fit a particular box or part of a final document or display. It is for this purpose that the re-sampling and scaling circuit 312 is provided. The dither circuit 280 performs scaling by resampling in the resampling and scaling circuit 312 using values loaded by the microprocessor 130 into the x and y ratio registers. The input pixels are reused for the x dimension scaling and the input lines are repeated for the y dimension scaling. The video input interface includes the facilities to repeat given lines by maintaining the horizontal sync signal HSYNC high after the end of a line and until the line has been repeated as many times as required to achieve the desired y scaling. The dither circuit 280 includes the necessary logic for determining the necessity for repeating a given line, but it is the source of the picture, such as the frame buffer 282 or camera, which in fact retransfers a line.

The dither circuit logic 320 includes a separate implementation of the scaling logic for the x and y dimension. The scaling factors for each dimension are represented by an 8-bit scale ratio loaded by the control processor 30 into an x scale ratio register and line (y) scale ratio register located in the resampling scaler circuit 312. Thus the scaling or enlargement is controlled by the microprocessor 130 through the x and y scale ratio registers, the bus 332 and the microprocessor interface 28'.

Scaling is usually needed to have precise control of the size of an image. Separate x and y scaling is needed because the aspect ratios of the input pixels and output pixels on the final display device may be different. Often CRT screens are not square whereas the imaging plane of the camera is square. Also, expansion or compression of the output display relative to the input image can be provided by this circuit.

The scaled image signals are then coupled from the scaling circuit 312 to the dither logic circuitry 320 by the bus 313.

The dither logic 320 performs a dithering function which will be explained more fully below. The output of the dither logic 320 is coupled via a bus 323 to an output buffer 322 in the output interface 34'. The output of the buffer 322 is coupled to the binary data output bus 324 in the VSP data and control output bus 36'.

Each of the circuits 26', 310, 312, 320, and 34' is controlled by the microprocessor 30 shown in Figure 1A through a VSP control processor interface 28' and a bus 332. The control processor interface 28' also couples through the bus 332 to a memory interface 350. Each of these circuits contains a set of control registers which are loaded by the microprocessor 30 through the control processor interface 28'. The control processor interface 28' includes a data/address I/O bus 331, a chip select signal line (S) 332, an address strobe signal line (AS) 333, a write strobe signal line (WS) 334, a read strobe signal line (RS) 335, and interrupt signal line (INT) 336.

In the illustrated embodiment, the maximum clock rate at which the dither circuit 280 processes data is 10 MHz. The data rate flags must be set to give the normal data rate of one-third of the system clock. If the input PIXEL CLOCK or the output PIXEL CLOCK are programmed as outputs, then the data clock rate is 10 MHz, that is, one-third of the system clock. If the input PIXEL CLOCK or the output PIXEL CLOCK are programmed as inputs, then the following rules apply:

  1.  A clock signal may be input which is synchronous with the system clock, but at the internal data clock rate of 10 MHz.
  2.  Any continuous, asynchronous clock signal may be input which is a fraction of the internal data clock rate.

The dither circuit 280 may operate in a non-VSP system, or where the system clock is less than 30 MHz. The data rate options allow an internal data clock rate of one X, two-thirds X, one-half X, and one-third X of the system clock rate. Other fractional data rates are possible, if needed. These options may only be used in applications where the system clock is less than 10 MHz and the resulting internal data clock rate is less than or equal to 10 MHz.

The data input bus 301 of the VSP input interface is 8-bits wide. Data may be input when the PIXEL VALID signal 304 is high. When the PIXEL VALID signal 304 is pulled low by the dither circuit 280, no further pixel data can be received by the dither circuit until its input buffer 308 has space therein to receive more data. In such an event the data bus 301 enters a tri-state conditions.

The VSYNC input 307 may be used to indicate the start of a frame on a low to high transition or may indicate a frame request. The VSYNC input signal controls the frame timing. If it is programmed as a "Frame Valid" input by the microprocessor setting a particular bit in a video input configuration register (not shown) in the input interface 26' of dither circuit 280, then the positive edge indicates start of a frame.
If it is programmed as a "Frame Request" output, then it
is asserted when the dither circuit is ready to input
the next frame, and it remains asserted until the frame,
or desired part of a frame, has been transferred. The
negative edge indicates the end of the desired frame, or
part of a frame where the rest of the frame is not
required.

The HSYNC input 306 is a line request when it
is maintained as a high or logic one level. If it
remains high after an entire line has been transferred
into the dither circuit 280, then the same line is
repeated. The HSYNC signal controls the line timing.
If it is programmed as "Line Valid" output, then HSYNC
is asserted before the start of the line and remains
asserted until after the end of the line. If HSYNC is
programmed as a "Line Request" input, then the positive
edge indicates a request for a new line, and it remains
asserted until the line, or desired part of a line, has
been transferred. The negative edge indicates the end
of the desired line, or part of a line where the rest of
the line is not required. If it remains asserted after
completion of transmission of the line, the same line is
retransmitted.

The clock input 302 indicates, on a positive
edge, that new data is present.

The PIXEL VALID input signal determined the
validity of the data on the video input data bus. When
PIXEL VALID is high, it indicates that a valid pixel is
present on the data bus 301. The PIXEL VALID signal may
be pulled down by the dither circuit to interrupt the
flow of incoming pixel data. When PIXEL VALID is
released and goes high, or when it next goes high, then the pixel data arriving during the following cycle is a valid next pixel.

The data/address bus 331 on the microprocessor interface is an 8-bit bus carrying address and data. Address information is clocked in on the positive edge of the address strobe. Data is clocked in on the positive transition of the write strobe and data is read out at the end of the read strobe. The chip select signal on line 332 indicates that the dither circuit interface is activated and that the control signals are valid. The interrupt signal on the line 336 indicates that a particular status such as "end of frame" exists. This interrupt signal is released when it is acknowledged or masked by the microprocessor 30. The address strobe indicates that the address information on the microprocessor data/address bus 331 is valid. The write strobe on the line 334 indicates that the data on the bus 331 is valid and can be written to whatever address is on the bus 331. The read strobe indicates that the dither circuit 280 has placed read data on the microprocessor bus 331 for the microprocessor 30 to read and process.

To load one of the registers in the dither circuit 280, the specific 8-bit register address is presented by the microprocessor on the data/address bus 331 and the address strobe signal on the line 383 is asserted. Then the data to be loaded into the register is presented on the bus 331 by the microprocessor 30 and the write strobe on the line 334 is asserted. Thus the dither circuit 280 may be considered as a memory mapped peripheral on the memory map. A decoder is used to generate the chip select signal. Or the dither circuit may be considered as a peripheral with two peripheral addresses (one address line), where the byte transferred to the first address is the register address within the dither circuit and the byte transferred to or from the second (peripheral) address is the register contents.

To read one of the registers, the 8-bit address is presented for the desired register by the microprocessor 30 as for a register load. The contents of this register are then read out onto the data/address bus 331 when the read strobe is asserted.

The dither circuit 280 allows a multiple byte data transfer. After a register is addressed, successive machine cycles automatically result in incrementing the address for the desired register and loading of the contents of that register onto the data/address bus 331. If the initial address was for access to a location in the intensity correction RAM or to a location in the external error RAM 356, then data bytes transferred during later machine cycles will be from successive memory locations within the RAM.

The output interface of the dither circuit 280 has a binary output (DATA) on the bus 324. Data output on the bus 324 is single bit binary data with one bit clocked out on each positive edge of the pixel clock (PIXEL CLOCK) 342. The pixel clock signal on the line 342 is an internally generated clock which indicates that new data is present on the data output line bus 324 as long as the pixel valid signal has the appropriate state.

The vertical sync output signal on the line 346 may be a frame valid indication which signals the start of a frame on a low to high transition. If that is the programmed mode for the VSYNC signal, the signal will abort the frame when pulled low. VSYNC may also be programmed to act as a frame request input.

The horizontal sync output (HSYNC) 344 indicates the start of a horizontal line on a low to high transition and aborts the line if pulled low. It too may be programmed as a line request input by setting a particular bit in a configuration register (not specifically shown) with the microprocessor 30.

The valid output (PIXEL VALID) 343 indicates that data on the data output bus 324 will be valid during the following cycle. PIXEL VALID may be programmed as an input signal in a similar fashion as noted above for the synchronization signals. When pulled low by the dither circuit 280, no further bits are transferred and the data bus 324 assumes a tri-state condition. It may also be programmed as an output signal.

The binary output video data may be connected to any peripheral which can process binary video data, such as a printer or CRT. Further, it can be coupled to the input of some other VSP subsystem, such as a frame buffer controller (FBC).

The output pixel clock (PIXEL CLOCK) may be programmed as an input signal or an output signal. If PIXEL CLOCK is an input signal, then a synchronous clock running at the internal data clock rate or any continuous, asynchronous clock running at up to half of the internal data clock rate may be input to serve as the pixel clock signal. The internal data clock rate is 10 MHz which is one-third of the system clock frequency.

All of the remaining output interface signals (VSYNC, HSYNC, PIXEL VALID, and DATA) are internally synchronized to the binary output clock (PIXEL CLOCK), regardless of whether PIXEL CLOCK is an input or an output. All of these signals, as outputs, are valid at some time after the positive edge of PIXEL CLOCK and before an output-delay time specification which depends upon the design. These signals remain valid until at least the specified output-hold-time after the next (or some subsequent) positive edge of the PIXEL CLOCK signal.

If any of the output interface signals (VSYNC, HSYNC, PIXEL VALID) are programmed as inputs, they are still synchronized to the input clock 302 (PIXEL CLOCK), regardless of whether PIXEL CLOCK is an input or an output. All of these signals, as inputs, must be valid before the specified set-up time preceding the positive edge of the input clock signal, and must remain valid until at least a design dependent specified hold-time after the same positive edge of the input clock signal.

The binary data output 324 (DATA) may be programmed to have its tri-state mode controlled by the output PIXEL VALID signal. There is a turn-on delay for assumption of this tri-state mode starting from the positive edge of PIXEL CLOCK after PIXEL VALID is asserted and a turn-off delay of the tri-state mode starting from the positive edge of PIXEL CLOCK after PIXEL VALID goes low.

The input PIXEL VALID signal signals the validity of the binary output data. If it is programmed as an output, then the data on the bus 324 is valid pixel data in the cycle following assertion of the PIXEL VALID signal. If PIXEL VALID is programmed as a bidirectional signal, then when pixel data is being output on bus 324 while PIXEL VALID is high, data transmission can be stopped by a system coupled to the bus 324 by that system pulling PIXEL VALID low. When PIXEL VALID is released and goes high, or when it next goes high, then the pixel data in the following cycle is valid. The binary output data bus 324 enters the tri-state condition during the next cycle following the return of PIXEL VALID to a low state.

The memory interface 350 couples to the control processor interface 28' as well as the control sequencer 340 in the input interface 26' via the bus 332. It also couples to the dither logic 320 via a bus 351. The memory interface 350 provides data, address and control paths between the dither circuit 280 and external static RAM 356 and provides the appropriate information exchange protocol to control the static RAM 356. The information paths include an address bus 352, a data bus 354, and a control bus 355. The address bus 352 carries addresses to the external static memory and the control bus 355 carries a memory write enable (WE) which indicates that data on the bus is data to be written to the RAM 356. The memory data bus 354 carries the data to be written when the write enable signal is asserted and carries data read from the RAM for read operations.

The memory interface is connected directly to the static memory through a 16 bit wide data path. The amount of memory required depends on the maximum line length to be processed as will become clear later when the dither logic is discussed in more detail later. The speed of the memory should be 25 ns faster than the internal data clock period.

Any static memory chips may be used, provided they meet the timing requirements and have separate data input and data output lines. Chips of this type may be used provided the data-in and data-out lines may be tied together without violating any loading or timing requirements.

The memory 356 is used to store an 8-bit cumulative error term associated with each pixel in the line. As each line is processed, the error term for each pixel is read from the memory, processed and a new cumulative error term is generated and the resulting new cumulative error term is written to the memory 356.

It is preferable not to have to wait for new addresses for the new cumulative term on the address bus 352 to settle before applying the write enable signal to write the new cumulative error terms to memory. The error terms are 8 bits wide, and normally, two error terms are read on every read cycle. To avoid the wait for new addresses to settle, the same address used for reading the two error terms is also used for writing the two new error terms. The dither circuit 280 keeps track of the address for the error term for the start of the line. This address is incremented by an offset value every time a new line is started. The error term for the pixel at the end of the line "wraps around" to the beginning of the memory such that the memory 356 may be considered to be a "loop" memory controlled by the dither circuit 280. No special property of the external static RAM 356 is required for this function. All the memory interface signals are synchronized to the system clock.

There are a number of registers in the dither circuit 280 which may be loaded or read by the control processor 30 in Figure 1A. The dither circuit includes working registers which cannot be accessed by the control processor but which contain duplicates of data stored in a set of shadow registers by the microprocessor 30 in Figure 1A. These shadow registers and control registers are loaded and used in the same fashion as they were used in the FBC. That is, the dither circuit uses the working registers to process a given frame while the control processor loads the shadow register in preparation for processing of the subsequent frame.  The contents of each shadow register is
transferred to the control register under the control of
a handshake between the control processor 30 and the
dither circuit 280.

The dither logic 320 is used to process an
image comprised of gray scale pixel data comprised of 8
bit words (up to 256 shades) into an image that is
comprised strictly of binary pixel data, i.e., single
bit pixels mapping onto physical dot locations in the
output raster display which are either on or off, that
is either black or white.  Dithering produces an
acceptable image so long as, in each local area of the
image, the average intensity of the dots is equal to the
gray scale value for that area.  The human eye, located
at some viewing distance, effectively interprets the
average intensity of the dots as the same image from
which the dithered image was derived.

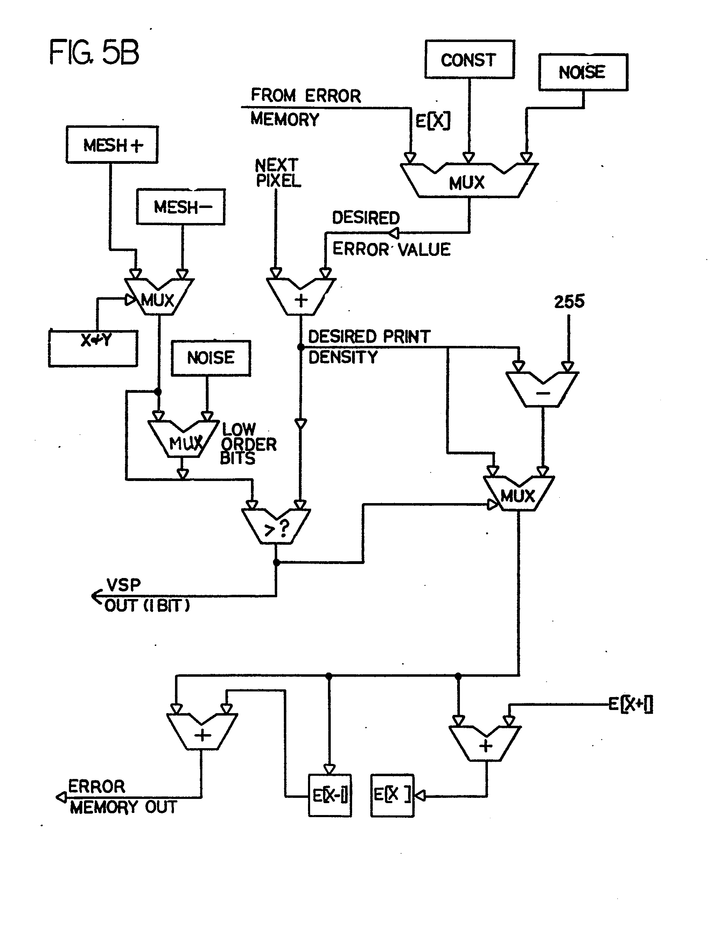

The dither logic 320 as illustrated in greater
detail in Figure 5B, does not operate on areas, however,
but rather operates on single pixels, one at a time.
The error at any single pixel location can be quite
large, but the results of an area of dots may be correct
since an error term is used to bias the decision on
adjacent pixels.  The error term is allocated to
surrounding pixels and the magnitude of the cumulative
error is sufficient to change some of the decision
levels from one level to the other.  The result is an
average area intensity which is generally accurate.

A threshold level is used to determined whether
a given pixel location is to be represented by black or
white (i.e., 0 or 255).  In order to establish better
perceived images, the threshold level is varied across
the image.  Two threshold levels are used, a positive
threshold and a negative threshold, while either threshold may be programmed to be between 9 and 255 by the control processor. The method of varying the threshold across the image is by alternating between the positive and the negative threshold according to a checkerboard mesh within a two pixel by two line resolution. Thus in either the vertical or horizontal direction, the threshold mesh will change from positive to negative threshold every second pixel location. In addition, a small amount of random noise can be added to the threshold wherein the magnitude of the noise added to the threshold is programmable 0, 2, 4, 8, or 16 by the processor.

As the dither circuit processes the incoming image data, the error term associated with each pixel in the line accumulates. If the error term is over the threshold, then the binary output data bit is asserted equivalent to displaying a white dot. In order to preserve the cumulative error passed on to the adjacent pixels, the white value of 255 must be subtracted from the error term.

Distribution of error terms among adjacent pixels is limited to those which have not yet been processed. The error term is distributed three ways in proportions 1/4, 1/2, 1/4. 1/4 is allocated to the next pixel to the right on the same line, 1/2 is allocated to the same pixel in the line below, and 1/4 is allocated to the pixel on the left but in the line below. This spreading approach, while appearing somewhat arbitrary, produces results that are highly acceptable to the human eye.

If successive pixels are input of constant low value (black) or constant high value (white), then the error terms may be accumulated. A finite size error term of 8 bits is utilized by the dither logic 280, and the accumulated error may exceed this limit (plus 127, minus 127). This overflow of the accumulated error term is ignored and has the effect of an occasional black dot in an otherwise white field, or the reverse. This does not have an adverse effect on the perceived image.

In order to avoid unwanted effects at the edge or boundaries of the image, random noise may be introduced at the top, left, and right boundaries. The magnitude of the noise may be programmed by the control processor through the processor interface as 0, 2, 4, 8, or 16 for the top edge with half that magnitude added to the error terms for the sides. Alternatively, the error terms for the top line may be taken from the error memory which must be loaded in advance by the processor. This dithering logic 320 is illustrated in Figure 5B.

Once the video image data has been dithered by the dither circuit 320 it is coupled to the output interface buffer 332 and then directly to the binary data output 324. The output binary data is then coupled, as shown in Figure 2, to a bi-tonal output device such as CRT 238, or printer 284 for use with a RGB color CRT, three channels of dither circuit are provided, one for red, one for green, and one for blue.

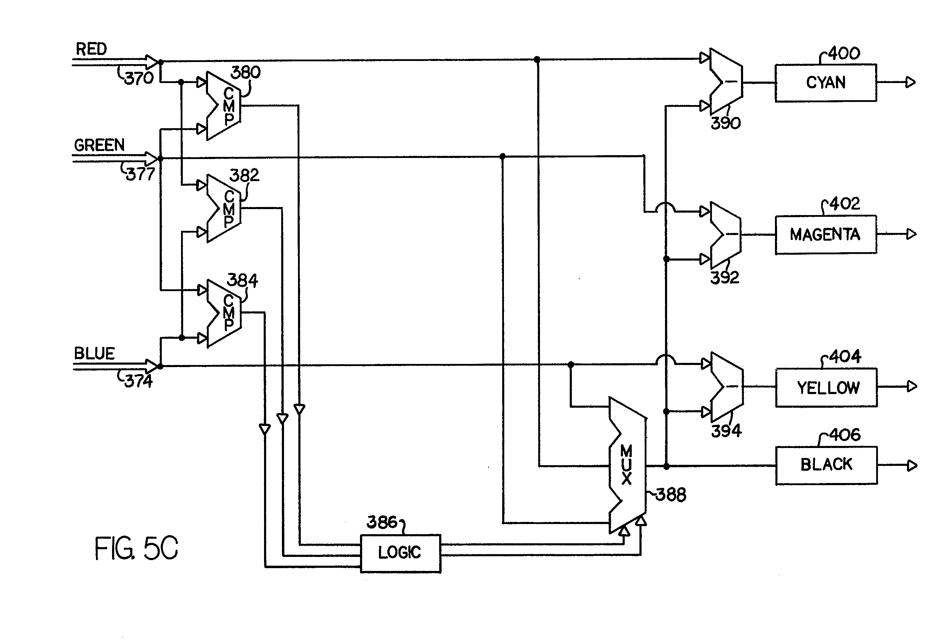

Referring now to Figure 5C there is shown a block diagram of a CMYBk (cyan, magenta, yellow, and black) color dithering application for the dither module 280 described above. Three color inputs signals in the VSP format are input on the lines 370, 377, and 374, as shown. Each of the three inputs are coupled to three comparators, 380, 382, and 384, which compare the signals and in conjunction with gate logic 386 provide a two line output to a multiplexer 388. The two line output of the logic 386 identifies the smallest of the three input signals for each pixel and controls the
multiplexer 388 to output from the multiplexer the
smallest of the three original input signals. This
smallest signal is then coupled to the input of three
subtractors 390, 392, 394, as shown. In addition, the
input red, green, and blue video stream signals are
coupled respectively to the subtractors 390, 392, 394.
The subtractors subtract off from the output of each
color signal the output of the multiplexer 388 and
couple that output signal to the three respective dither
chips 400, 402, and 404 associated respectively with the
colors cyan, magenta, and yellow. In addition, the
output of the multiplexer 388 is coupled directly to a
fourth dither circuit 406 representing black output.

As a result, an offset is subtracted from the
original red, green, and blue channels which then goes
into the cyan 400, magenta 402, and yellow 404 dither
circuits, along with a fourth black channel, generated
from the lowest original color channel, which is coupled
to a black dither circuit 406. This results in actually
dithering only within three channels but wherein the
three channels change from pixel to pixel to produce a
four channel output which can run at video rates and
produce very high quality color images. The outputs
from the four dither circuits 400, 402, 404, 406 can
then be applied to a four channel output device to
produce a color dithered output. This structure is
suitable for complementary color four channel output
devices that generally have yellow, magenta, cyan, and
black output channels, for example, printers and, with
some variations, certain CRTs.

The RGB to CMYBk space conversion can be
performed by use of the dither circuit look-up tables,
appropriately programmed to invert the input data pixels.

In general, the dither circuit look-up table should be programmed such that the polarity of the dither output matches that of the final output device (e.g., is black/white an I/O or an O/I).

In addition to the VSP subsystems discussed above, there are many other VSP family subsystems which are useful in various applications. Examples include a VSP ALU subsystem, a 64K byte VSP look-up table, a greatest-in-first-out sorting chip which provides a constantly updated best-of-N circuit, a VSP microprocessor, a VSP to non-VSP bidirectional protocol conversion system, a VSP N x N window generation subsystem, and a VSP interpolating space transformation subsystem.

A specific embodiment of the VSP system has been described for purposes of illustrating the manner in which the invention may be made and used. It should be understood that implementation of other variations and modifications of the invention in its various aspects will be apparent to those skilled in the art, and that the invention is not limited thereto by the specific embodiment described. It is therefore contemplated to cover by the present invention any and all modifications, variations, or equivalents that fall within the true spirit and scope of the basic underlying principles disclosed and claimed herein.

WHAT IS CLAIMED IS:

1. A video information processing system for modifying digital multi-level color video data, composed of a pixel array wherein each pixel location comprises a plurality of basic color pixel values for output on a bi-level multi-color output device, the system characterized by:

means for subtracting the lowest level pixel value from each pixel value for each pixel array location to produce modified color pixel values;

means for generating a black pixel value corresponding to the lowest level for each pixel array location; and

processing means for processing the modified color pixel values and the black pixel values into related binary video data generating output binary color video data for each pixel array location.

2. The system of Claim 1 characterized in that the means for subtracting further comprises comparator means for comparing the plurality of basic color pixel values for each pixel location to each other and generating control signals identifying the lowest level pixel value.

3. The system of Claim 1 or 2 characterized in that the means for generating a black pixel value comprises multiplexer means for selecting and outputting the lowest pixel value for each location responsive to the control signals.

4. The system of Claim 3 characterized in that the means for subtracting comprises subtractor means for subtracting the output of the multiplexer from each of the basic color pixel values and outputting the difference.

5. The system of any of Claims 1 to 4 characterized in that the basic colors are Red, Green and Blue.

6. The system of any of Claims 1 to 5 characterized in that the output device is a bi-level, cyan-magenta-yellow-black printer.

7. The system of any of Claims 1 to 6 characterized in that the processing means processes pixels into binary video data based upon a variable threshold by operating upon each pixel and allocating error to adjacent pixels in the pixel array.

8. The system of Claim 7 characterized in that the processing means further comprises means for varying the threshold across the array of pixels alternately between an upper and a lower threshold according to a predetermined pattern.

9. The system of Claim 8 characterized in that the processing means further comprises means for accumulating an error term for each pixel and distributing the error term among adjacent unprocessed pixel values in the array in a predetermined proportion.

10. A method of processing color video data comprised of multi-level pixel values for each of a plurality of basic input colors for each location in a pixel array, for output on a bi-level, multi-color output device, the method characterized by the steps of:

subtracting the lowest level pixel value among the plurality of basic input colors from each pixel value for each location in the pixel array to generate modified color pixel values;

generating a black video pixel value corresponding to the lowest pixel value from among the plurality of input colors for each pixel array location; and

processing the modified color pixel values and the black video pixel value into binary video data thereby generating output binary pixels for each of the modified color pixel values and the black pixel value.

11. The method of Claim 10 wherein the step of subtracting is characterized by comparing the plurality of basic color pixel values for each pixel location to each other and generating control signals identifying the lowest level pixel value.

12. The method of Claim 10 or 11 characterized in that the step of generating a black video pixel value further comprises the step of selecting and outputting the lowest pixel value for each array location responsive to the control signal.

13. The method of any of Claims 10 to 12 characterized in that the step of processing further comprises the step of processing pixels into binary video data based upon a variable threshold by operating upon each pixel and allocating error to adjacent pixels in the pixel array.

14. The method of Claim 13 characterized in that the step of processing further comprises varying the threshold across the array of pixels alternately between an upper and a lower threshold according to a pattern.

15. Digital video information control apparatus for use with a video processing system in conjunction with a digital memory for control and storage of digital video information, characterized by:

(a)  programmable input means, for input of digital video information for selective storage in the digital memory and for output of digital video information, the input means comprising

a plurality of programmable control registers for controlling the input means;

video input buffers for buffered input and output of digital video information;

a plurality of control signal inputs for input of data validation and synchronization signals, and a clock input;

(b)  programmable output means, for selective output of digital video information stored in the digital memory, the output means comprising

a plurality of programmable control registers for controlling the output means;

video output buffers for buffering output of digital video information;

a plurality of control signal outputs for output of data validation and synchronization signals, and a clock signal output;

(c)  processor interface means, coupled to the video input and output buffers and the programmable registers, for bidirectional exchange of data with the input buffers for storage to and recall from the digital memory and for transfer of control data to the programmable registers; and

(d)  memory interface means, for exchange of digital video data with the digital memory and the video buffers and for providing control signals for control of the memory responsive to control signals from the input and output means programmable control registers.

16. The apparatus of Claim 15 characterized by differential counter means, coupled to the input means, the output means and the processor interface means, for controlling simultaneous input of digital video data to the input means and output of digital video data from the output means responsive to the control data to prevent incoming data from overwriting outgoing data in the digital memory.

17. The apparatus of Claim 16 characterized in that the differential counter means comprises a counter which is incremented responsive to an input means synchronization signal, and decremented responsive to an output means synchronization signal, and further comprised means for disabling the input interface when the counter is zero and enabling the input interface when the counter is non-zero and when the outgoing data reaches the end of a frame.

18. The apparatus of any of Claims 15 to 17 characterized by means for de-interlacing video information supplied in a two field interlaced format and storing the video information in continuous memory locations.

19. The apparatus of any of Claims 15 to 17 characterized by means for interlacing output of digital video information from the digital memory and for generating appropriate synchronization signals for an interlaced display.

20. The apparatus of any of Claims 15 to 19 characterized by means for output of digital video information stored in the digital memory in the form of an image frame, wherein the digital video information is output in a sideways fashion accessing digital video data by successive columns across the frame.

21. The apparatus of any of Claims 15 to 20 characterized in that the processor interface means is further comprised of means for processor enabling of a direct pixel access flag and means for coupling video data from any memory location in the digital memory to the processor interface means, responsive to the direct pixel access flag and input of a memory address through the processor interface means.

22. The apparatus of any of Claims 15 to 21 characterized in that the digital memory is a dynamic random access memory (DRAM) further comprising refresh means for automatically refreshing.

23. A frame buffer controller system for coupling to a stream of pixel data of video image signal, characterized by:

read-write memory for selectively storing and outputting the pixel data;

video input interface means for selectively inputting and storing the pixel data;

video output means for selectively buffering and outputting the pixel data;

controller interface means coupled to the memory and to the video input interface and to the video output interface for controlling memory bidirectional access responsive to the video input and output interface;

processor interface means for providing control signals to interface means, and for communicating data with the video input and output;

wherein said image video signal data storage and retrieval of said memory is responsive to said control signals.

24. The system as in Claim 23 characterized in that said memory is dynamic RAM (DRAM), and

said controller additionally manages DRAM refresh.

25. The system as in Claim 24 characterized in that said controller accesses said DRAM in nibble mode.

26. The system as in any of Claims 23 to 25 characterized in that said controller internally buffers the read and write of data to the memory, wherein said system simultaneously inputs and outputs data from the frame buffer system.

27. The system as in any of Claim 23 to 26 characterized in that said controller internally buffers the read and write of data to the memory, internally interleaving data, so as to provide for effective simultaneous input and output of data from the frame buffer system.

28. The system as in any of Claims 23 to 27 characterized in that,

said video input and video output interface are each further comprised of control registers, programmable responsive to said processor interface means, for controlling sequencing of storage and retrieval of data from said memory.

29. The system as in Claim 28 characterized in that said control registers are further comprised of:

interface registers, readable and writable responsive to the processor interface means;

working registers, coupled to communicate with said interface registers;

wherein said working registers control the sequencing of the storage and retrieval of data from memory.

30. A video signal processing system characterized by:

means for coupling to a video signal source of pixel data;

a modular family of vision processing subsystems, each having a processor interface and a video interface;

said video interface providing a pixel clock signal, a line synchronization signal, a frame synchronization signal, and pixel data; and

said processor interface connectable to a processor and including

means for selectively enabling said processor interface;

means for delaying data transfer between the processor and selected subsystem;

a common bus; and

means for designating data on the common bus as address or data.

31. The system as in Claim 30 characterized in that said family of subsystems are characterized by:

a plurality of functionally distinct subsystems; and

a plurality of at least one of said distinct subsystems, cascaded together for parallel operation.

32.  The system as in Claim 30 or 31 characterized in that said family of subsystems is characterized by:

a plurality of functionally distinct subsystems, coupled together through a plurality of distinct video interface buses, for providing pipelined parallel processing of pixel data.  .

33.  The system as in any of Claims 30 to 32 characterized in that said video interface signals are selectively bidirectional.

34.  The system as in Claim 33 characterized in that said video interface signal bidirectionality is programmable responsive to said processor interface signals.

35.  The system as in any of Claims 30 to 34 characterized in that said pixel data is digitized to at least 1 bit per pixel.

36.  The system as in any of Claims 30 to 35 characterized in that said pixel data is packed binary data.

37.  The system as in any of Claims 30 to 35 characterized in that said pixel data is grey scale data.

38.  The system as in any of Claims 30 to 37 characterized in that said video signal source is from the class of a video camera, a digital communications line, and one of said plurality of subsystems.

39.  A video information processing system, characterized by:

a video signal source for outputting a video signal;

a modular family comprising a plurality of subsystems for processing video information;

wherein communication means between the subsystems comprises a video interface and a processor interface;

said video interface comprising pixel data and synchronization signals for pixel, line and frame;

said processor interface comprising a processor interface activation signal, a transfer delay signal, and data signals;

wherein each subsystem comprises means for interactively responding to said video and processor interfaces so as to effect characterization of said video signal.

40. The system as in Claim 39 characterized in that said video signal is a stream of a plurality of images, said stream outputting images for processing at video rates.

41. The system as in Claim 39 or 40 characterized in that at least one subsystem is further comprised of two independently operable video interfaces, and

means for delaying transfer of pixel data via one video interface to synchronize with the transfer of pixel data on the other video interface.

42. The system as in Claim 40 characterized in that said stream of images comprises a plurality of temporally spaced outputs of pixel data.

43. The system as in Claim 42 characterized in that said stream of images of pixel data is output from a first one of said subsystems, wherein said first subsystem is comprised of:

means for selectively inhibiting output of the next temporal output from said first subsystem responsive to said pixel synchronization signal being externally asserted during the then current temporal output.

44. The system as in Claim 43 characterized by:

    means for selectively enabling output of the next temporal output from said first subsystem responsive to release of said external asserting of said pixel synchronization signal.

45. The system as in any of Claims 39 to 44 characterized in that at least one subsystem provides a video interface output directly compatible with a display device.

46. The system as in Claim 45 characterized in that said display device is a CRT, a hard copy peripheral or a standard television.

47. The system as in any of Claims 39 to 46 characterized in that said processor interface further comprises a data designator signal for indicating the address or data characteristic of the data signals presently being interfaced.

48. The system as in any of Claims 39 to 46 characterized in that at least one of said plurality of subsystems is further comprised of means for selectively communicating said video signals via said video interface responsive to said processor interface.

49. The system as in any of Claims 39 to 46 characterized in that at least one of said plurality of subsystems is further comprised of:

    means for storing during a current frame, next frame video processing instructions, responsive to said processor interface signals;

    means for coupling said video signals as pixel data on said video interface; and

    means for effecting characterization of said video signal pixel data when said next frame becomes current, responsive to said previously stored next frame instructions.

50. The system as in any of Claims 39 to 49 characterized in that said video signal source is a video camera, or one of said plurality of subsytems.

51. The system as in any of Claims 39 to 50 characterized in that said video signal is comprised of digitized pixel data.

52. The system as in any of Claims 39 to 51 characterized in that said subsystem is further comprised of:

a system clock; and

means responsive to said synchronization signals for transferring pixel data asynchronously to said system clock.

53. The system as in any of Claims 39 to 52 characterized in that a plurality of said subsystems concurrently process pixel data in parallel.

54. The system as in Claim 53 characterized by a plurality of video interface buses, independently and exclusively coupling between the video interfaces of a plurality of subsystems.

55. The system as in Claim 54 characterized in that said plurality of subsystems process said pixel data in a pipelined manner utilizing said plurality of video interface buses.

56. The system as in any of Claims 39 to 55 characterized in that said line and frame synchronization signals define variably sized line and frame boundaries for said pixel data.

57. The system as in any of Claims 39 to 56 characterized in that at least one of said plurality of subsystems is characterized by:

window means for constructing an N x M window of pixel data; and extraction means for providing characteristic data on said N x M window.

58. The system as in Claim 57 wherein said means for providing characteristic data is further comprised of means for performing $N^2$ parallel processing operations on said N x M window.

59. The system as in Claim 57 wherein said window means constructs a moving stream of N x M windows, and

wherein said extraction means provides an output stream of characteristic data responsive to said moving stream of N x M windows.

60. The system as in Claim 57 wherein N = M = 3.

61. The system as in Claim 57 wherein N = M = 5.

62. The system as in Claim 57 wherein said window means is further comprised of:

a plurality of N delays means, including first and last delay means,

each delay means having M storage units, each delay means providing for selective shifting of pixel data unidirectionally between the M storage units of said delay means so as to effect a temporal delay of M shift times,

the input of said first delay means coupled to receive the output pixel data from the video interface of one of said plurality of subsystems,

the output of each said N delay means coupling to a separate one of N video interface inputs of a second one of said plurality of subsystems having N video interfaces,

the outputs of all but the last delay means coupling to the input of a next delay means,

wherein said plurality of N delay means provides N temporally staggered streams of M units of pixel data output to said second subsystem.

63. The system as in any of Claims 39 to 62 at least one of said plurality of subsystems is characterized by:

frame buffer means comprising:

means for selectively storing and retrieving said pixel data in a read/write memory; and

means for communicating said pixel data between said read/write memory and said video interface.

64. The system as in any of Claims 39 to 63 characterized in that at least one of said plurality of subsystems is characterized by:

frame buffer means comprising:

means for selectively sorting and retrieving said pixel in a read/write memory; and

means for communicating said pixel data between said read/write memory and said processor interface.

65. The system as in any of Claim 39 to 64 characterized in that said pixel data is digital grey-scale data comprising an array of pixels representing a two-dimensional bounded image;

wherein at least one of said plurality of subsystems is characterized by:

dithering means for inputting the digitized grey-scale data through the video interface, said dithering means comprising:

modification means for modifying the intensity characteristics of digitized grey-scale data responsive to the processor interface signals;

scaling means for selectively compressing and expanding scaling of the digitized grey-scale data independently in each of the two dimensions responsive to the processor interface signals;

process means for variably threshholding said digitized grey-scale data;

wherein said dithering means outputs a dithered bi-tonal output representative of the input digitized grey-scale video data.

66. The system as in any of Claims 39 to 65 characterized in that at least one of said plurality of subsystems is characterized by:

means for outputting characteristic data representative of statistical analysis of said pixel data responsive to said processor interface signals.

67. The system as in Claim 39 wherein at least one of said plurality of subsystems is further comprised of:

means for transforming in space said pixel data as input through the video interface, responsive to said processor interface signals.

68. The system as in Claim 39 wherein at least one of said plurality of said plurality of subsystems is further comprised of:

means for functionally mapping from pixel data, as input through the video interface, to characteristic data for output as pixel data through the video interface.

69. The system as in Claim 57 wherein at least one of said plurality of subsystems is further comprised of:

video processor means, comprising a plurality of video interfaces each coupled to a separate video stream of said window of pixel data for loading registers internal to said video processor in an interleaved manner wherein said video processor processes said windows of pixel data in parallel, in a pipelined manner.

70. The system as in Claim 58 characterized by:

a user interface system for communicating user commands to the system and the system responses to the user.

71. The system as in Claim 58 wherein said plurality of subsystems is further comprised of:

frame buffer means coupled to said signal output from said video source for storing pixel data representive of video source signal output;

window generating means for constructing an N x M window comprising a plurality of N-time-staggered streams of M-time units of temporally spaced pixel data;

processing said window of pixel data pipelined-interleaved fashion.

72. A video stream processing system for processing digitized video information, characterized by:

control processor means for providing control signals and for processing data signals;

a plurality of video signal processing elements each having an input port including a digital video information stream input, a video pixel clock input, a control signal input, a plurality of synchronization signal inputs, said plurality of video signal processing elements including,

frame buffer means, having processor interface port coupled to the control processor, and having an input and an output port, for storage in a digital memory of digitized video information received from at least one of a plurality of ports including the input port and the processor interface port, and for controlled output of the stored digitized video information through at least one of a plurality of ports including the input port, the output port and the processor interface port, responsive to control processor means control signals; and

characterization means, having a processor interface port selectively activatable responsive to an activation signal, for extractingcharacteristic data from digitized video information output from the frame buffer means responsive to the control signals from the processor means.

73. The system as in Claim 71 characterized by:

a device to be inspected and characterized;

handling means for selectively manipulating said device from an initial position, to a viewing position, and to a final position, responsive to said control signals; viewing means for providing digitized video information representative of the device when the device is positioned in the viewing position, responsive to said control signals; and

means for coupling said digitized video information to said frame buffer means.

74. The system as in Claim 73 wherein said control processor provides control signals to manipulate said device to one of a plurality of final positions responsive to said characterization means.

75. The system as in Claim 74 wherein said device is a semiconductor component.

76. A video image processing system, characterized by:

first means for acquiring a digitized video image, and outputting representative pixel data;

second means for processing said video image to enhance selected characteristics thereof, and outputting representative pixel data;

third means for providing characterization data responsive to feature extraction of said video image, and outputting representative pixel data;

fourth means for classification of said video image responsive to said characterization data, and outputting representative pixel data;

a system clock;

wherein each of said first, second, third and fourth means is further comprised of:

video interface means for communicating said pixel data, and pixel synchronization data between said first, second, third and fourth means;

wherein at least two of said first, second, third and fourth means are further comprised of means for communicating said pixel data between said at least two means asynchronously to said system clock responsive to said pixel synchronization data.

77. A video information processing system for coupling to a control processor comprising:

video signal means for providing a video signal comprising pixel data, and signals for line and frame synchronization; and

a plurality of subsystems each comprising:

video interface means for coupling pixel data to said subsystem responsive to said video signal;

processor interface means selectively actuatable for bidirectionally communicating address, control and data signals between the control processor; and

a plurality of mutually exclusive video interface buses for coupling video signals to respective video interface means among the subsystems, and from the video signal means.

78. The system as in Claim 77 characterized by a system clock;

wherein said video signal is further comprised of a pixel synchronization signal; and

wherein said video interface means of each subsystem is responsive to said pixel synchronization signal for communicating pixel data asynchronously relative to said system clock.

79. The system as in Claim 77 wherein each video interface bus can operate asynchronously relative to other ones of the video interface buses.

80. The system as in Claim 77 wherein said video interface provides for bidirectional communications of said video signal.

81. The system as in Claim 77 wherein said video signal means provides a video stream of a plurality of temporally spaced video signals.

82. The system as in Claim 81 characterized in that said plurality of subsystems further comprises a delay means subsystem which selectively provides a temporally delayed output of a selected portion of said video stream input to said first subsystem.

83. The system as in Claim 82 characterized in that a plurality of said delay means subsystems are interconnected so as to provide a time-staggered parallel output of different selected portions of said video stream.

84. The system as in Claim 83 characterized in that said plurality of delay means provides said parallel outputs responsive to said processor means.

85. The system as in Claim 83 characterized in that each delay means is further comprised of a shift register for storing its respective selected portion of said video stream;

wherein said plurality of delay means provides a time-staggered moving window of temporally spaced video-signals representative of said video stream.

86. The system as in Claim 85 wherein at least one of said plurality of subsystems is further comprised of:

means for interleaved parallel processing said moving window of video signals.

87. The system as in Claim 83 wherein said plurality of delay means can operate asynchronously relative to one another to provide asynchronously time-staggered parallel outputs of selected portions of the video stream.

88. The system as in Claim 77 wherein at least one of said plurality of subsystems is coupled to a display device.

SCHLUMBERGER LIMITED
42 RUE SAINT DOMINIQUE
75340 PARIS CEDEX 07
TEL. 555 91 23 TELEX SLPAR 260644
ADRESSE TELEGRAPHIQUE ESSELPAR PARIS

PRIÈRE DE RÉPONDRE / PLEASE REPLY TO :
SCHLUMBERGER LIMITED - SERVICE BREVETS
12, PLACE DES ETATS-UNIS - B.P. 121
92124 MONTROUGE CEDEX - FRANCE
. (1) 47 46 65 43 - TELEX : MEROP 203148

European Patent Office          November 29, 1985
P.B. 5818 Patentlaan, 2
2280 HV Rijswijk (ZH)
Netherlands

R 88

Dear Sirs,

Re :    European Patent Application 85401073.3
        FAIRCHILD CAMERA AND INSTRUMENT CORPORATION
        Our Ref. : 67.025/26/27 Replying to your letter of 6 November 1985 related to the
above-mentioned European patent application and in accordance
with Rules 41 and 88, we request that sheets 2 and 5 to 9 of
drawings be corrected as indicated below :

   In Figure 1B:

        - cancel "VALID" and "CLOCK" and respectively replace by
"PIXEL VALID" and "PIXEL CLOCK".

   In Figure 4A:

        - cancel numeral "419" (two occurrencies) and replace by
"22' ";

        - add numeral "453" to designate the DATA bus between
block 450 and block 430;

        - add numeral "451" to designate the ADDRESS and CONTROL
bus between block 450 and block 430;

        - add numeral "435" to designate the bus between block
430 and block 425;

        - add numeral "433" to designate the bus between block
424 and block 430;

        - add numeral "431" to designate the bus between block
414 and block 430;

0205712

R 88

- add numeral "445" to designate the bus between block 416 and block 414;

- add numeral "443" to designate the block "INTERFACE";

- add numeral "447" to designate the bus between block 443 and block 440;

- cancel numeral "449" and replace by "36".


In Figure 4G:

- add numerals "453" and "451" to designate the left and right buses respectively between the block "RAM" and the block 430;

- add numerals "433" and "435" to designate the left and right buses respectively between block 430 and block 420;

- add number "429" to designate the right output of block 420.


In Figures 4C and 4D:

- cancel the indication "DATA ADDRESS";

- add numerals "453" and "451" to designate the left and right buses respectively between block 450 and block 430;

- add numerals "445" and "431" to designate the left and right buses respectively between block 430 and block 410;

- add numeral "22' " to designate the bus on the left of block 410.


In Figures 4E and 4F:

- add numerals "453" and "451" to designate the left and right buses respectively between block 450 and block 430;

- add a new line connecting block 410 to bus 451 and add numeral "431" to designate this new line;

- add numeral "445" to designate the bus between block 430 and block 410;

- add numeral "36' " to designate the bus connected to the lower end of block 440.

0205712

R 88

In Figure 5A:

        - add numeral "26' " to designate the dotted line around blocks 308 and 340;

        - add numeral "311" to designate the bus between blocks 310 and 312;

        - add numeral "313" to designate the bus between blocks 312 and 320;

        - add numeral "332" to designate the bus between blocks 312 and 350;

        - add numeral "351" to designate the bus between blocks 350 and 320;

        - add numeral "323" to designate the bus between blocks 320 and 322;

        - cancel numeral "321" and replace by numeral "34' ";

        - add a new dotted line in and out of block 34' and designate this new dotted line by numeral "36' ";

        - cancel "CLOCK" and "VALID" in block 340 (two occurrencies) and replace by "PIXEL CLOCK" and "PIXEL VALID" respectively;

        - add a new input dotted line indicated "22' " at the lower left corner of Figure 5A;

        - cancel numeral "330" and replace by numeral "28' ";

        - add a new output dotted line at the lower right corner of block 34'.


In Figure 5B:

        - add numeral "500" to designate the block named MESH+,

        - add numeral "502" to designate the block named MESH-,

        - add numeral "504" to designate the block named MUX connected to the outputs of  blocks 500 and 502,

        - add numeral "506" to designate the block named X + Y,

        - add numeral "510" to designate the block named NOISE,

        - add numeral "508" to designate the block named MUX connected to the outputs of blocks 504 and 510,

        - add numeral "510" to designate the block named "+",

        - add numeral "514" to designate the block named ">?"

0205712

R 88

- add numeral "511" to designate the input named "NEXT PIXEL" to block 510.

- add numeral "512" to designate the input of block 514 from block 510.

- add numeral "518" to designate the output named "VSP OUT" from block 514.

- cancel "MUX" in block 508 and replace by the sign "+".

- cancel the sign ">?" in block 514 and replace by the word "COMPARATOR".

- add numeral "353" to designate the block named "NOISE" at the upper right portion of figure 5B.

- add numeral "351" to designate the 3 inputs of the "MUX" block at the upper right portion of Figure 5B.

- draw a short line and add the expression "SELECT FROM ADDRESS COUNTER CRT" on the right side of the "MUX" block at the upper right portion of Figure 5.

The above corrections are in accordance with the observations disclosed in your letter dated 6 November 1985. These corrections are obvious in view of the description and are intended only to bring the figures in conformity with the description.

These corrections are included in sheets 2 and 5 to 9 of drawings which were filed with our letter of 17 September 1985. Therefore we request that the corrected drawings be published with the application.

Yours faithfully,

Schlumberger Patent Department,

L. Chareyron

LC/fd

0205712

FIG. 1A

0205712

2 / 11

FIG. IB

PROCESSOR INTERFACE

VIDEO STREAM PROCESSING SUBMODULE

VSYNC
HSYNC
VALID
CLOCK

DATA/ADDR BUS (8 BITS)

SELECT
ADDR STROBE
WRITE STROBE
READ STROBE
READY
INT

~32'

22'

28'

36'

VSYNC
HSYNC
VALID
CLOCK

26'
VIDEO
INPUT
INTERFACE

34'
VIDEO
OUTPUT
INTERFACE

DATA

DATA

SYSTEM
CLOCK

GND

ROW. ADDR STROBE
COL. ADDR STROBE
WE -LOW
WE -UPPER
RE

VCC

DATA/ADDR BUS

42'

MEMORY INTERFACE

FIG. 2

0205712

0205712

4/11

FIG. 3A

FROM SENSOR → CORRECTION CIRCUIT 140 → CORRECTED OUTPUT 144

FRAME BUFFER 142

CORRECTION MEMORY

FIG. 3B

152 (+) → FRAME BUFFER 150 → 151 → CORRECTED OUTPUT 144

FIG. 3C

160 (+) → FRAME BUFFER 166 → 165 → CORRECTED OUTPUT

164 (−)

FRAME BUFFER 162

PAST FRAMES

FIG. 4A

FIG. 4B

```
┌──────────┐          ┌──────────┐
│  D RAM   │          │  SYSTEM  │
└──────────┘          │  CLOCK   │
     ↕                └──────────┘
┌──────────┐               ↓
│  EVEN    │          ┌──────────┐
│  F B C   │          │   ÷2     │
└──────────┘          └──────────┘
     ↕  ◁──────────────────┘
┌──────────┐
│  ODD     │
│  F B C   │
└──────────┘
     ↕
┌──────────┐
│  D RAM   │
└──────────┘
```

FIG. 4G

```
      ┌──────────┐
      │   RAM    │
      └──────────┘
   ┌ ─ ─ ─ ─┐ ↓  ↑
   │   ┌────┴──┴──────┐
   │   │      ┌─430   │
   │   │   ↑          │
   │   │              │
   │   │      ┌──420  │
   │   │     ┌┴──┐    │
   │   │  ↑  │   │    │
   │   │     │   │──▷ →
   │   │     │   │    │
   │   │ 420┘└───┘    │
   └ ─ ─ ─ ─┘         │
       └──────────────┘
```

FIG. 4H

```
┌──────────────────────┐
│                      │
│  410         420     │
│ ┌────┐      ┌────┐    │
│ │    │      │    │    │
│ │    │      │    │    │
│ └────┘ 440  └────┘    │
│   ↑  ┌──────┐  ↑      │
│   └──│      │──┘      │
│      └──────┘         │
│        ↑  ↓           │
└──────────────────────┘
```

0205712

7 / 11

FIG. 4C

FIG. 4D

FIG. 4E

FIG. 4F

FIG. 5A

FIG. 5B

FIG. 5C

0205712

FIG. 6

VSP IN#1

VSP IN#2

VSP IN#3

LATCH

DELAY

SHUFFLE EXCHANGE ELEMENT

MIDDLE VSP ELEMENT OUT